# EUROPEAN PATENT APPLICATION

(11) **EP 4 734 411 A1**
(43) Date of publication of application: **29.04.2026**
(21) Application number: 24860079.3
(22) Date of filing: 12.06.2024
(51) Int. Cl.: H04L 1/00, H04L 1/20, H04L 47/70

(54) **IMAGE PROCESSING DEVICE AND METHOD**

(30) Priority: 25.08.2023 KR 20230112323; 03.11.2023 KR 20230150604
(71) Applicant: Samsung Electronics Co., Ltd., Suwon-si, Gyeonggi-do 16677 (KR)
(72) Inventor: JUNG, Chanho, Suwon-si, Gyeonggi-do 16677 (KR)
(74) Representative: Appleyard Lees IP LLP
(86) International application number: PCT/KR2024/008049
(87) International publication number: WO 2025/048155

(57) **Abstract**

A transmission device in an image processing system, includes: at least one processor configured to: transmit, to a reception device, first forward-error-correction (FEC) encoded data including first source data encoded at a first bitrate and first repair data used for error correction of the first source data; receive, from the reception device, information related to a reception error for the first FEC encoded data; and determine whether to change a bitrate of second source data into a second bitrate higher than the first bitrate based on the information related to the reception error, and wherein the second source data is included in second FEC encoded data transmitted after the first FEC encoded data is transmitted.

## Description

### [Technical Field]

The disclosure relates to an image processing device and method.

### [Background Art]

An image processing device may adaptively adjust the image transmission rate according to the network environment. For example, the image processing device may decrease the image transmission rate if the network is congested and may increase the image transmission rate if the network is not congested.

When the image processing device provides an image, a target bandwidth may be configured to provide a desired quality of image. The target bandwidth may differ from a current image transmission rate. Then, the image processing device may need to adjust the image transmission rate up to the target bandwidth. In this case, a method for adjusting the image transmission rate up to the target bandwidth without deteriorating image quality or without having image glitch may be needed.

### [DISCLOSURE]

### [TECHNICAL SOLUTION]

According to an aspect of the disclosure, a transmission device in an image processing system, includes: a communication circuit; memory storing a program including at least one instruction; and at least one processor connected to the communication circuit and the memory and executing the at least one instruction of the program stored in the memory, wherein the at least one processor is configured to: transmit, to a reception device, first forward-error-correction (FEC) encoded data including first source data encoded at a first bitrate and first repair data used for error correction for the first source data; receive, from the reception device, information related to a reception error for the first FEC encoded data; and determine whether to change a bitrate of second source data into a second bitrate higher than the first bitrate based on the information related to the reception error, and wherein the second source data is included in second FEC encoded data transmitted after the first FEC encoded data is transmitted.

According to an aspect of the disclosure, a reception device in an image processing system, includes: a communication circuit; memory storing a program including at least one instruction; and at least one processor connected to the communication circuit and the memory and executing the at least one instruction of the program stored in the memory, wherein the at least one processor is configured to: receive, from a transmission device, first forward error correction (FEC) encoded data including first source data encoded at a first bitrate and first repair data used for error correction for the first source data; generate information related to a reception error for the first FEC encoded data; transmit, to the transmission device, information related to a reception error for the first FEC encoded data; and receive, from the transmission device, second FEC encoded data including second source data encoded at a second bitrate and second repair data used for error correction for the second source data, wherein the second bitrate of the second source data is determined based on the information related to the reception error.

According to an aspect of the disclosure, a method by a transmission device in an image processing system, includes: transmitting, to a reception device, first forward error correction (FEC) encoded data including first source data encoded at a first bitrate and first repair data used for error correction for the first source data; receiving, from the reception device, information related to a reception error for the first FEC encoded data; and determining whether to change a bitrate of second source data into a second bitrate higher than the first bitrate based on the information related to the reception error, wherein the second source data is included in second FEC encoded data transmitted after the first FEC encoded data is transmitted.

### [DESCRIPTION OF DRAWINGS]

FIG. 1 illustrates an image processing system according to an embodiment of the disclosure;
FIG. 2 illustrates a transmission device according to an embodiment of the disclosure;
FIG. 3 illustrates a reception device according to an embodiment of the disclosure;
FIG. 4A illustrates a method in which a transmission device performs encoding and forward error correction (FEC) encoding according to an embodiment of the disclosure;
FIG. 4B illustrates an example of a packet structure for transmitting FEC-encoded data according to an embodiment of the disclosure;
FIG. 5 illustrates a method in which a reception device performs FEC decoding and decoding according to an embodiment of the disclosure;
FIG. 6A illustrates examples of an image displayed based on data decoded by a reception device according to an embodiment of the disclosure;
FIG. 6B illustrates an example method in which a reception device reconstructs a data packet by performing FEC decoding according to an embodiment of the disclosure;
FIG. 7 illustrates an example relationship between a target bandwidth, a network bandwidth, and a packet transmission rate according to an embodiment of the disclosure;
FIG. 8A illustrates an example packet transmission/reception context according to a transmission rate adjustment procedure according to an embodiment of the disclosure;
FIG. 8B illustrates an example change in data packet transmission rate according to a transmission rate adjustment procedure according to an embodiment of the disclosure;
FIG. 9 illustrates a transmission rate adjustment procedure according to an embodiment of the disclosure;
FIG. 10 illustrates operations of a transmission device in a transmission rate adjustment procedure according to an embodiment of the disclosure;
FIG. 11 illustrates operations of a reception device in a transmission rate adjustment procedure according to an embodiment of the disclosure;
FIG. 12 is illustrates a transmission rate adjustment procedure according to an embodiment of the disclosure;
FIG. 13 illustrates operations of a transmission device in a transmission rate adjustment procedure according to an embodiment of the disclosure;
FIG. 14 illustrates operations of a reception device in a transmission rate adjustment procedure according to an embodiment of the disclosure;
FIG. 15A illustrates an example packet transmission/reception context according to a transmission rate adjustment procedure according to an embodiment of the disclosure;
FIG. 15B illustrates an example change in data packet transmission rate according to a transmission rate adjustment procedure according to an embodiment of the disclosure;
FIG. 16 illustrates a procedure for setting a transmission rate adjustment mode according to an embodiment of the disclosure;
FIG. 17 illustrates operations of a reception device in a procedure for setting a transmission rate adjustment mode according to an embodiment of the disclosure;
FIG. 18 illustrates an example of a user interface provided by a reception device to set a transmission rate adjustment mode according to an embodiment of the disclosure;
FIG. 19 illustrates a method by a transmission device according to an embodiment of the disclosure; and
FIG. 20 illustrates a method by a reception device according to an embodiment of the disclosure.

### [MODE FOR INVENTION]

Embodiments of the disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

Before undertaking the detailed description below, it may be advantageous to set forth definitions of certain words and phrases used throughout the disclosure. The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items The term "glitch," as used with respect to image, may mean "defect," "flaw," "fault," "error," and the like.

As used herein, the term "unit" means a software element or a hardware element such as a field-programmable gate array or an application specific integrated circuit. A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units.' Further, an element or a 'unit' may be implemented to reproduce one or more central processing units (CPUs) in a device or a security multimedia card. According to embodiments, a "...unit" may include one or more packet processing devices.

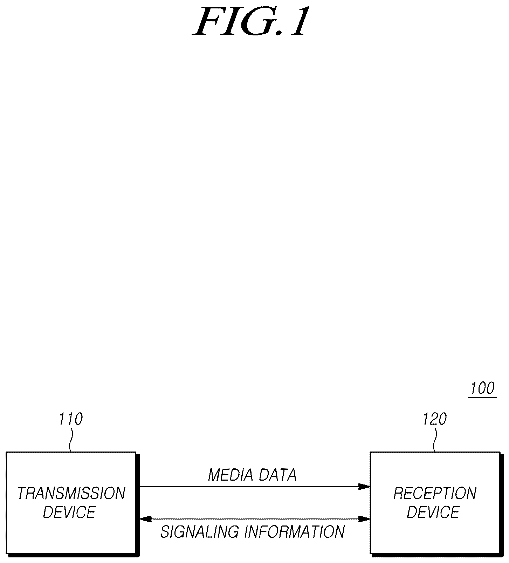

FIG. 1 schematically illustrates an image processing system according to an embodiment of the disclosure.

Referring to FIG. 1, an image processing system 100 may include a transmission device (or transmitting device) 110 and a reception device (or receiving device) 120. In the disclosure, the transmission device 110 may be referred to as an image transmission device or an image providing device. The reception device 120 may be referred to as an image reception device or an image playback device.

According to an embodiment, the transmission device 110 may transmit media data (e.g., video and image) to the reception device 120. For example, the transmission device 110 may transmit an image signal, including the media data, to the reception device 120 through a network, and the reception device 120 may receive the image from transmission device 110 and play the image signal. The transmission device 110 may encode the image signal by removing duplicate information in the video signal to the extent that it cannot be visually detected and compressing it. The transmission device 110 may efficiently store, transmit, and manage the image signal by encoding the image signal within a set compression rate range. The image signal may include, but is not limited to, a real-time encoded image including e.g., a screen mirroring image, a video conference image and game image.

According to an embodiment, the transmission device 110 and the reception device 120 may exchange signaling information (or signaling messages) for delivering and/or consuming media data (or image signals including media data). For example, the signaling message may include FEC-related information.

According to an embodiment, the transmission device 110 may include various image source devices, such as a television (TV), a personal computer (PC), a smartphone, a tablet, a set-top box, and a game console, and the reception device 120 may include various image playback devices, such as a TV, a smartphone, a tablet, and a PC. The transmission device 110 and the reception device 120 are not limited to a specific type of devices.

According to an embodiment, the transmission device 110 and the reception device 120 may transmit/receive image signals through a network. According to one or more embodiments, the network 130 connecting the transmission device 110 and the reception device 120 may include a short-range communication network, such as wireless fidelity (Wi-Fi), or a remote communication network, such as a cellular network, a next-generation communication network, the Internet, or a computer network (e.g., local area network (LAN) or wide area network (WAN)), and may communicate based on an IP communication protocol. The cellular network may include global system for mobile communications (GSM), enhanced data GSM environment (EDGE), code division multiple access (CDMA), time division multiplexing access (TDMA), 5G, long-term evolution (LTE), and LTE-advanced (LTE-A). The network may include connections of network components, such as hubs, bridges, routers, switches, and gateways. The network may include one or more connected networks, e.g., a multi-network environment, including public networks such as the Internet and private networks such as business private networks. Access to the network may be provided via one or more wired or wireless access networks. Further, the network may support Internet-of-things (IoT) networks, which exchange information between distributed components, e.g., things, and process the information.

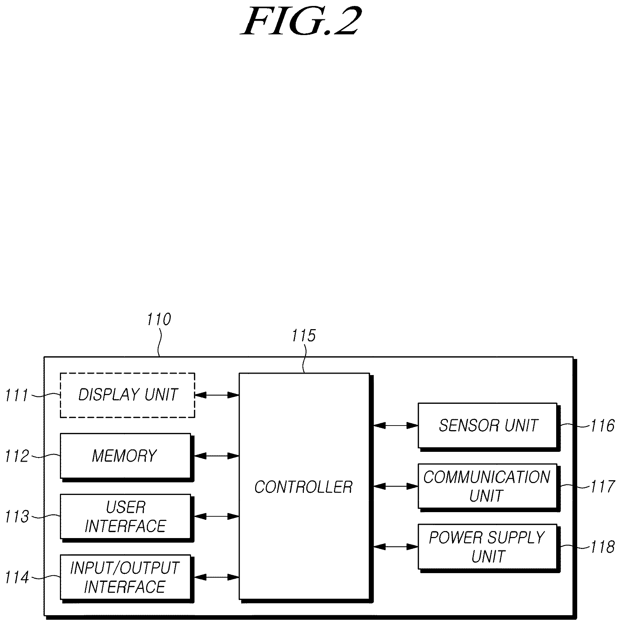

FIG. 2 is a block diagram schematically illustrating a transmission device according to an embodiment of the disclosure.

Referring to FIG. 2, a transmission device 110 may include a display 111, memory 112, a user interface 113, an input/output interface 114, a controller 115, a sensor 116, a communication circuit 117, and/or a power supplier 118. In an embodiment, at least one component (e.g., the display 111) of the components may be omitted from the transmission device 110, or one or more other components may be added in the electronic device 101. In an embodiment, some of these components may be integrated into one component. In the disclosure, the controller 115 may be defined as a circuit or application-specific integrated circuit or at least one processor.

According to an embodiment, the display 111 may visually provide information to the outside (e.g., the user) of the transmission device 110. The display 111 may include, for example, a display, a hologram device, or a projector and control circuitry to control a corresponding one of the display, hologram device, and projector. According to an embodiment, the display 111 may include a touch sensor configured to detect a touch, or a pressure sensor configured to measure the intensity of a force generated by the touch.

According to an embodiment, the memory 112 may store various data used by at least one component (e.g., the controller 115 or the sensor 116) of the transmission device 110. The various data may include, for example, software (e.g., the program) and input data or output data for a command related thereto. The memory 112 may include a volatile memory or a non-volatile memory.

According to an embodiment, the user interface 113 may provide an interface for facilitating interaction between the user and the transmission device 110. The user interface 113 may provide, e.g., a method, means, and tools for the user to manipulate the transmission device 110 and obtain information. The user interface 113 may include, but is not limited to, e.g., graphic user interfaces, text-based user interfaces, touch interfaces, or speech recognition interfaces.

According to an embodiment, the input/output interface 114 may receive an input signal (e.g., command or data), to be used in a component (e.g., the controller 115) of the transmission device 110, from the outside (e.g., the user) of the transmission device 110 or may output an output signal to the outside. The input/output interface 114 may include, for example, a microphone, a speaker, an audio, a mouse, a keyboard, keys (e.g., buttons), or a digital pen (e.g., a stylus pen).

According to an embodiment, the controller 115 may control the overall operation of the transmission device 110. The controller 115 may execute, for example, software (e.g., a program) to control at least one other component (e.g., a hardware or software component) of the transmission device 110 coupled with the controller and may perform various data processing or computation. According to an embodiment, as at least part of the data processing or computation, the controller 115 may store a command or data received from another component (e.g., the sensor 116 or the communication circuit 117) in the memory 112, process the command or the data stored in the memory 112, and store resulting data in the memory 112.

According to an embodiment, the controller 115 may refer to at least one processor that includes or corresponds to circuitry like a CPU, a graphics processing unit (GPU), a neural processing unit (NPU), an image signal processor (ISP), a display controller, a memory controller, a microprocessor unit (MPU), an application processor (AP), a coprocessor, a system-on-chip (SoC), or an integrated circuit (IC), and/or a communication processor (CP).

The above-described sub-components are merely exemplary. For example, the controller 115 may further include other sub-components. For example, some sub-components may be omitted from the controller 115.

According to an embodiment, the sensor 116 may detect an operational state (e.g., power or temperature) of the transmission device 110 or an external environmental state (e.g., the user's state), and then generate an electrical signal or data value corresponding to the detected state. The sensor 116 may include, e.g., a gesture sensor, a gyro sensor, an atmospheric pressure sensor, a magnetic sensor, an acceleration sensor, a grip sensor, a proximity sensor, a color sensor, an infrared (IR) sensor, a bio sensor, a temperature sensor, a humidity sensor, or an illuminance sensor.

According to an embodiment, the communication circuit 117 may support establishing a direct (e.g., wired) communication channel or a wireless communication channel between the transmission device 110 and the external electronic device (e.g., reception device 120, another electronic device, or a server) and performing communication via the established communication channel. The communication circuit 117 may include one or more communication processors that are operable independently from the controller 115 and supports a direct (e.g., wired) communication or a wireless communication. According to an embodiment, the communication circuit 117 may include a wireless communication module (e.g., a cellular communication module, a short-range wireless communication module, or a global navigation satellite system (GNSS) communication module) or a wired communication module (e.g., a LAN communication module or a power line communication (PLC) module). A corresponding one of these communication modules may communicate with the external electronic device via a first network (e.g., a short-range communication network, such as Bluetooth^{™}, Wi-Fi direct, or infrared data association (IrDA)) or a second network (e.g., a long-range communication network, such as a legacy cellular network, a 5G network, a next-generation communication network, the Internet, or a computer network (e.g., LAN or WAN). These various types of communication modules may be implemented as a single component (e.g., a single chip), or as multi components (e.g., multi chips) separate from each other.

According to an embodiment, the power supplier 118 may supply power to the transmission device 110 and manage the power supplied to the transmission device 110.

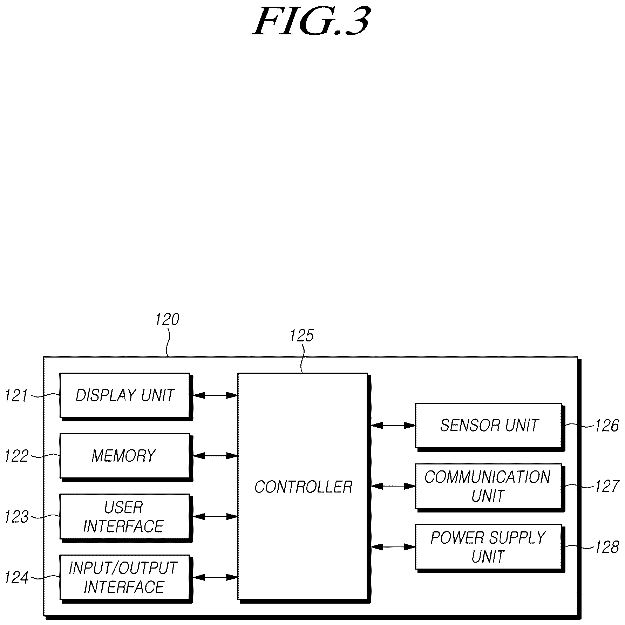

FIG. 3 is a block diagram schematically illustrating a reception device according to an embodiment of the disclosure.

Referring to FIG. 3, a reception device 120 may include a display 121, memory 122, a user interface 123, an input/output interface 124, a controller 125, a sensor 126, a communication circuit 127, and/or a power supplier 128. In an embodiment, at least one (e.g., the sensor 126) of the components may be omitted from the transmission device 110, or one or more other components may be added in the electronic device 101. In an embodiment, some of these components may be integrated into one component. In the disclosure, the controller 125 may be defined as a circuit or application-specific integrated circuit or at least one processor.

According to an embodiment, the display 121 may visually provide information to the outside (e.g., the user) of the reception device 120. The display 121 may include, for example, a display, a hologram device, or a projector and control circuitry to control a corresponding one of the display, hologram device, and projector. According to an embodiment, the display 121 may include a touch sensor configured to detect a touch, or a pressure sensor configured to measure the intensity of a force generated by the touch.

According to an embodiment, the memory 122 may store various data used by at least one component (e.g., the controller 125 or the sensor 126) of the reception device 120. The various data may include, for example, software (e.g., the program) and input data or output data for a command related thereto. The memory 122 may include a volatile memory or a non-volatile memory.

According to an embodiment, the user interface 123 may provide an interface for facilitating interaction between the user and the reception device 120. The user interface 123 may provide, e.g., a method, means, and tools for the user to manipulate the reception device 120 and obtain information. The user interface 123 may include, but is not limited to, e.g., graphic user interfaces, text-based user interfaces, touch interfaces, or speech recognition interfaces.

According to an embodiment, the input/output interface 124 may receive an input signal (e.g., command or data) to be used in a component (e.g., the controller 125) of the reception device 120 from the outside (e.g., the user) of the reception device 120 or may output an output signal to the outside. The input/output interface 124 may include, for example, a microphone, a speaker, an audio, a mouse, a keyboard, keys (e.g., buttons), or a digital pen (e.g., a stylus pen).

According to an embodiment, the controller 125 may control the overall operation of the reception device 120. The controller 125 may execute, for example, software (e.g., a program) to control at least one other component (e.g., a hardware or software component) of the reception device 120 coupled with the controller and may perform various data processing or computation. According to an embodiment, as at least part of the data processing or computation, the controller 125 may store a command or data received from another component (e.g., the sensor 126 or the communication circuit 127) in the memory 122, process the command or the data stored in the memory 122, and store resulting data in the memory 122.

According to an embodiment, the controller 125 may include sub-components (e.g., processors) including, e.g., a CPU, a GPU, an NPU, an ISP, a display controller, a memory controller, and/or a CP. The above-described sub-components are merely exemplary. For example, the controller 125 may further include other sub-components. For example, some sub-components may be omitted from the controller 125.

According to an embodiment, the sensor 126 may detect an operational state (e.g., power or temperature) of the reception device 120 or an external environmental state (e.g., the user's state), and then generate an electrical signal or data value corresponding to the detected state. The sensor 126 may include, e.g., a gesture sensor, a gyro sensor, an atmospheric pressure sensor, a magnetic sensor, an acceleration sensor, a grip sensor, a proximity sensor, a color sensor, an infrared (IR) sensor, a bio sensor, a temperature sensor, a humidity sensor, or an illuminance sensor.

According to an embodiment, the communication circuit 127 may support establishing a direct (e.g., wired) communication channel or a wireless communication channel between the transmission device 110 and the external electronic device (e.g., reception device 120, another electronic device, or a server) and performing communication via the established communication channel. The communication circuit 127 may include one or more communication processors that are operable independently from the controller 125 and supports a direct (e.g., wired) communication or a wireless communication. According to an embodiment, the communication circuit 127 may include a wireless communication module (e.g., a cellular communication module, a short-range wireless communication module, or a global navigation satellite system (GNSS) communication module) or a wired communication module (e.g., a LAN communication module or a PLC module). A corresponding one of these communication modules may communicate with the external electronic device via a first network (e.g., a short-range communication network, such as Bluetooth^{™}, Wi-Fi direct, or IrDA) or a second network (e.g., a long-range communication network, such as a legacy cellular network, a 5G network, a next-generation communication network, the Internet, or a computer network (e.g., LAN or WAN). These various types of communication modules may be implemented as a single component (e.g., a single chip), or may be implemented as multi-components (e.g., multi-chips) separate from each other.

According to an embodiment, the power supplier 128 may supply power to the reception device 120 and manage the power supplied to the reception device 120.

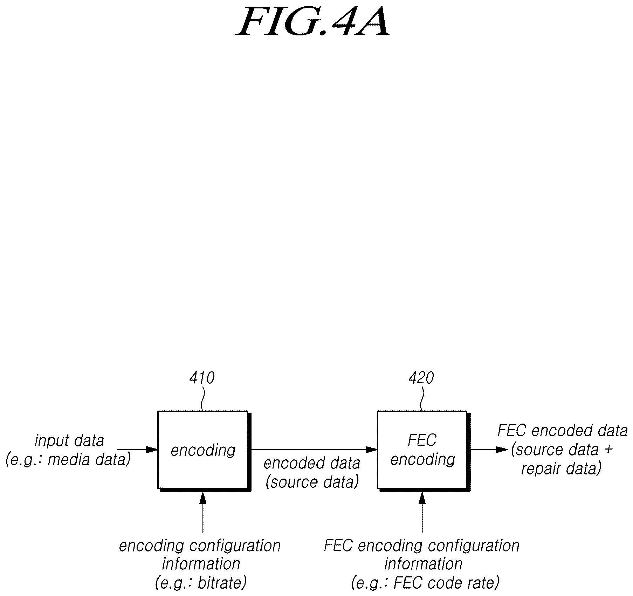

FIG. 4A schematically illustrates a method in which a transmission device performs encoding and FEC encoding according to an embodiment of the disclosure.

According to an embodiment, encoding and/or FEC encoding may be performed by a transmission device (e.g., the transmission device 110 of FIGS. 1 and 2) or a controller (e.g., the controller 115 of FIG. 2) of the transmission device.

Referring to FIG. 4A, the transmission device may perform an encoding operation 410 and an FEC encoding operation 420. According to an embodiment, the transmission device may perform the FEC encoding operation 420 after performing the encoding operation 410.

According to an embodiment, in the encoding operation 410, the transmission device may generate encoded data by encoding input data using encoding configuration information. The encoding configuration information may include, but is not limited to, e.g., information (e.g., codec information) about the encoding/decoding scheme and information about the bitrate (e.g., 3.8 megabits/sec for 720p image quality or 6.8 megabits/sec for 1080p image quality) used for encoding media data. As the bitrate increases, the image quality may increase. The encoding/decoding scheme may include, e.g., an advanced video coding (AVC)/H.264 scheme, a high efficiency video coding (HEVC)/H.265 scheme, and a versatile video coding (VVC)/H.266 scheme, but is not limited thereto. The input data may include, e.g., media data (e.g., video data, image data, or frame data), but is not limited thereto. The encoded data generated through the encoding operation 410 may be used as source data protected by FEC encoding in the FEC encoding operation 420. In the disclosure, the encoded data may be referred to as source data. In the disclosure, the bitrate used for encoding media data may also be referred to as an encoding bitrate.

According to an embodiment, in the FEC encoding operation 420, the transmission device may FEC-encode the encoded data using FEC encoding configuration information, generating FEC-encoded data or repair data. In the disclosure, the FEC-encoded data may be referred to as FEC encoding data. The FEC encoding configuration information may include, but is not limited to, information about the FEC scheme, information about FEC rate, and information about FEC code rate. The FEC scheme may be, but is not limited to, a reed Solomon code scheme, a low-density parity check scheme or a polar code scheme. The FEC code rate is information used to FEC-encode the encoded data to generate repair data and may correspond to a value (e.g., source data K/FEC-encoded data N) obtained by dividing the size of the source data by the size of the FEC-encoded data. The FEC-encoded data generated through the FEC encoding operation 420 may include source data and repair data for forward error correction for the source data. In the disclosure, the repair data may be referred to as parity data.

According to an embodiment, the FEC encoding operation 420 may be an operation performed by the application layer. The protocol for processing by the application layer may be, but is not limited to, e.g., MPEG-2 transport stream (TS) protocol, MPEG media transport (MMT) protocol, dynamic adaptive streaming over HTTP (DASH) protocol, or real-time object delivery over unidirectional transport (ROUTE) protocol.

According to an embodiment, the encoding operation 410 and the FEC encoding operation 420 may be performed in unit of frame (image frame). In this case, the encoding configuration information and/or FEC configuration information may be configured per frame. For example, the transmission device may individually configure the encoding configuration information and FEC configuration information per frame. Thus, the transmission device may adaptively adjust the bitrate of the source data (or media data) according to the congested context of the network in unit of frame.

According to an embodiment, the bitrate of the source data may be a number of bits of source data transmitted for a predetermined time. For example, when the source data is source data encoded at a bitrate of 6 megabits/sec, source data of 6 megabits may be transmitted per second.

According to an embodiment, the bitrate of the repair data may be the number of bits of repair data transmitted for a predetermined time. For example, when the repair data is repair data FEC-encoded at a bitrate of 1 megabit/sec, source data of 1 megabit may be transmitted per second. In the disclosure, the bitrate of the repair data may be referred to as a FEC rate.

According to an embodiment, the transmission device may generate first source data by encoding data of a first frame at a first bitrate (i.e., generate the first source data encoded at the first bitrate) and generate first repair data by FEC-encoding the first source data at a first FEC code rate (or first FEC rate), thereby obtaining first FEC encoding data including the first source data and the first repair data. According to an embodiment, the transmission device may generate second source data by encoding data of a second frame subsequent to the first frame at a second bitrate (i.e., generate the second source data encoded at the second bitrate) and generate second repair data by FEC-encoding the second source data at a second FEC code rate (or second FEC rate), thereby obtaining second FEC encoding data including the second source data and the second repair data. According to an embodiment, the first bitrate for the first frame may be equal to (or same) or different from the second bitrate for the second frame. According to an embodiment, the first FEC code rate for the first frame may be equal to (or same) or different from the first FEC code rate for the second frame. For example, the bitrate and the code rate may be set independently per frame.

According to an embodiment, the encoding operation 410 and the FEC encoding operation 420 may be performed in unit of group of frames or in unit of block included in the frame or group of blocks included in the frame.

According to an embodiment, the transmission device may transmit the FEC-encoded data through at least one packet. For example, the transmission device may transmit the source data through at least one data packet and transmit the repair data through at least one FEC packet. In the disclosure, the data packet may be referred to as an FEC data packet, source packet, or FEC source packet, the FEC packet may be referred to as a reconstructed packet, parity packet, FEC reconstructed packet, or FEC parity packet, and the packet group, including the data packet(s) and associated FEC packet(s), may be referred to as an FEC packet group, transmission packet group, or FEC encoding packet group.

According to an embodiment, the transmission device may transmit at least one data packet, which belongs to the FEC packet group, based on the transmission rate of the data packet and transmit at least one FEC packet, which belongs to the corresponding FEC packet group, based on the transmission rate of the FEC packet. In the disclosure, the transmission rate of data packet may be referred to as a data transmission rate, data packet transmission rate, or data packet transmission speed. In the disclosure, the transmission rate of FEC packet may be referred to as an FEC transmission rate, FEC packet transmission rate, or FEC packet transmission speed.

According to an embodiment, the transmission rate of data packet may be, e.g., the number of data packets transmitted for a predetermined time. For example, when encoding and FEC encoding are performed in unit of frame, the transmission rate of data packet for a corresponding frame may be the number of data packets transmitted for a specified time (e.g., for 1/60 seconds when the frame rate is 60fps) when the corresponding frame is shown (or, displayed).

According to an embodiment, the transmission rate of data packet may be determined based on the bitrate of the source data. For example, as the bitrate of source data increases, the transmission rate of the data packet may increase (proportional relationship). In the disclosure, the transmission rate of data packet and the bitrate of source data transmitted through a data packet(s) may be interchangeably used, and the description of embodiments based on the transmission rate of data packet may be applied to the description of embodiments based on the bitrate of source data in substantially the same or a similar manner. According to an embodiment, the transmission rate of FEC packet may be, e.g., the number of FEC packets transmitted for a predetermined time. For example, when encoding and FEC encoding are performed in unit of frame, the transmission rate of FEC packet for a corresponding frame may be the number of FEC packets transmitted for a specified time (e.g., for 1/60 seconds when the frame rate is 60 fps) when the corresponding frame is shown (or, displayed).

According to an embodiment, the transmission rate of the FEC packet may be determined based on the FEC rate (bitrate) or FEC code rate of the repair data. For example, as the FEC rate increases, the transmission rate of the FEC packet may increase (proportional relationship). For example, as the FEC code rate increases, the transmission rate of the FEC packet may decrease (reversely proportional relationship). In the disclosure, the transmission rate of FEC packet and the FEC rate of repair data transmitted through a FEC packet(s) may be interchangeably used, and the description of embodiments based on the transmission rate of FEC packet may be applied to the description of embodiments based on the FEC rate of repair data in substantially the same or a similar manner.

In one or more embodiments of the disclosure, the transmission rate of data packet and the transmission rate of FEC packet may be a number of data packets and a number of FEC packets transmitted for a same predetermined time (e.g., during when the corresponding frame is exhibited), but the disclosure is not limited thereto.

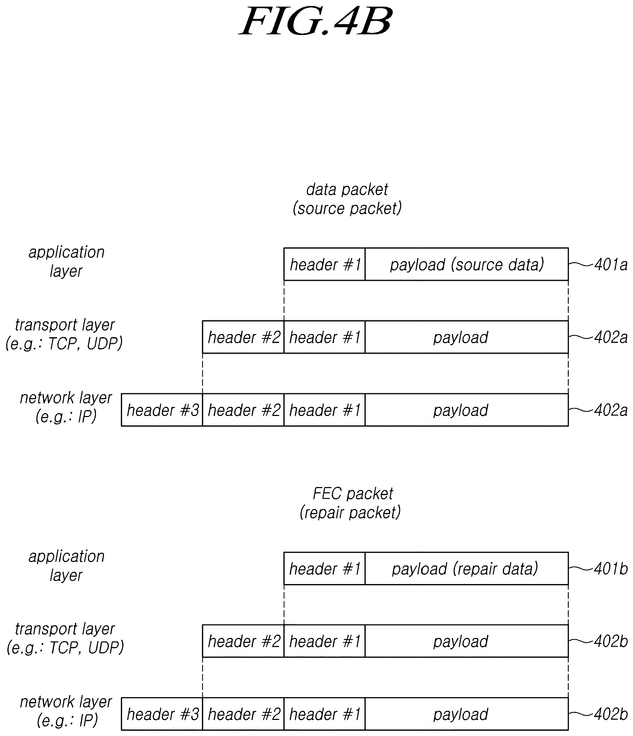

FIG. 4B illustrates an example of a packet structure for transmitting FEC-encoded data according to an embodiment of the disclosure.

According to an embodiment, a transmission device (e.g., the transmission device 110 of FIGS. 1 and 2) may perform application layer processing (e.g., packetization), generating at least one data packet 401a including source data and at least one FEC packet 401b including repair data.

According to an embodiment, the packetization of the application layer may be performed after an FEC encoding operation (e.g., the FEC encoding operation 420 of FIG. 4A), but the disclosure is not limited thereto. For example, the packetization for the source data may be performed before the FEC encoding operation or in parallel with the FEC encoding operation.

According to an embodiment, the data packet 401a may include a header (e.g., header #1) and a payload including at least a portion of source data. For example, the payload of the data packet 401a may include a portion of source data for one frame. In this case, the overall source data for one frame may be transferred through a plurality of data packets 401a.

According to an embodiment, the FEC packet 401b may include a header (e.g., header #1) and a payload including at least a portion of repair data. For example, the payload of the FEC packet 401b may include a portion of the repair data for one frame. In this case, the overall repair data for one frame may be transferred through a plurality of FEC packets 401b.

According to an embodiment, the header of the data packet 401a and the header of the FEC packet 401b may include packet sequence information and/or FEC-related information.

According to an embodiment, the FEC-related information may be generated per frame.

According to an embodiment, the packet sequence number information may indicate the sequence number of the corresponding packet. The reception device may identify the sequence of the packet based on the packet sequence number information. Thus, the reception device may identify, e.g., which packet is the dropped packet, and what is the number of the packet.

According to an embodiment, the FEC-related information may include, but is not limited to, e.g., FEC type information, FEC packet group identification information, FEC packet group total packet number information, data packet number information and/or FEC packet number information.

According to an embodiment, the FEC type information may indicate whether the corresponding packet is a data packet or an FEC packet. Based on the FEC type information, the reception device may identify the FEC type of the corresponding packet.

According to an embodiment, the FEC packet group identification information may include information for identifying the FEC packet group to which the corresponding packet belongs. Based on the FEC packet group identification information, the reception device may identify the FEC packet group to which the corresponding packet belongs. The FEC packet group may include data packets and FEC packets associated with one FEC encoding data. The FEC packets belonging to the FEC packet group may be used for forward error correction for data packets belonging to the same FEC packet group. For example, a separate FEC packet group may be generated per frame.

According to an embodiment, the FEC packet group total packet number information may indicate the number of all the packets belonging to the corresponding FEC packet group. For example, the total packet number information may be the sum of the total number of data packets belonging to the corresponding FEC packet group and the total number of FEC packets belonging to the corresponding FEC packet group. Based on the FEC packet group total packet number information, the reception device may identify how many packets in the FEC packet group are dropped (or lost) during transmission. For example, when the total number of packets indicated by the FEC packet group total packet number information is 10, and the total number of data packets and FEC packets counted by the reception device is 9, the reception device may identify that one packet is dropped during transmission. The reception device may identify the sequence of dropped packets based on, e.g., the packet sequence number information.

According to an embodiment, the data packet number information may indicate the number of data packets belonging to the corresponding FEC packet group. Based on the data packet number information, the reception device may identify how many data packets in the corresponding FEC packet group are dropped during transmission. The reception device may identify the sequence of dropped data packets based on, e.g., the packet sequence number information.

According to an embodiment, the FEC packet number information may indicate the number of FEC packets belonging to the corresponding FEC packet group. Based on the FEC packet number information, the reception device may identify how many FEC packets in the corresponding FEC packet group are dropped during transmission. The reception device may identify the sequence of dropped FEC packets based on, e.g., the packet sequence number information.

According to an embodiment, the transmission device may transmit at least a portion (e.g., total packet number information, data packet number information, and/or FEC packet number information) of the FEC-related information through a separate signaling message, to the reception device. For example, the transmission device may transmit, to the reception device, a signaling message including at least a portion of the FEC-related information while establishing a wireless connection.

According to an embodiment, the size of each data packet 401a may be variable size or a fixed size. According to an embodiment, the size of each FEC packet 401b may be a variable size or a fixed size.

According to an embodiment, the transmission device may perform transport layer processing, generating at least one transport layer packet 402a including data of the data packet 401a and at least one transport layer packet 402b including data of the FEC packet 401b.

According to an embodiment, the transport layer packet 402a or 402b may include a header (e.g., header #2) and a payload including at least a portion of the data of the related application layer packet 401a or 402b. For example, as illustrated in FIG. 4B, one transport layer packet 402a or 402b may include data of one related application layer packet 401a or 401b but is not limited thereto. For example, data of one application layer packet 401a or 401b may be included in a plurality of transport layer packets 402a or 402b (segmentation case), and data of a plurality of application layer packets 401a or 401b may be included in one transport layer packet 402a or 402b (concatenation case).

According to an embodiment, the header of the transport layer packet 402a or 402b may include packet sequence information and/or information related to transport layer processing. The protocol for transport layer processing may be, e.g., transmission control protocol (TCP) or user datagram protocol (UDP), but is not limited thereto.

According to an embodiment, the transmission device may perform network layer processing, generating at least one network layer packet 403a or 403b including data of the transport layer packet 402a or 402b.

According to an embodiment, the network layer packet 403a or 403b may include a header (e.g., header #3) and a payload including at least a portion of the data of the related transport layer packet 402a or 402b. For example, as illustrated in FIG. 4B, one network layer packet 403a or 403b may include data of one related transport layer packet 402a or 402b, but is not limited thereto. For example, data of one transport layer packet 402a or 402b may be included in a plurality of network layer packets 403a or 403b (segmentation case), or data of a plurality of transport layer packets 402a or 402b may be included in one network layer packet 403a or 403b (concatenation case).

According to an embodiment, the header of the network layer packet 403a or 403b may include packet sequence information and/or information related to network layer processing. The protocol for network layer processing may be, e.g., an Internet protocol (IP), but is not limited thereto.

According to an embodiment, the transmission device may process, at the physical layer, at least one network layer packet (403a or 403b) generated and transmit it to the reception device.

According to an embodiment, the reception device may perform inverse operations (e.g., in reverse order) of those of the transmission device. For example, the reception device may obtain at least one network layer packet 403a or 403b through physical layer processing, obtain at least one transport layer packet 402a or 402b through network layer processing, and obtain at least one application layer packet (e.g., data packet/FEC packet) 401a or 401b through transport layer processing.

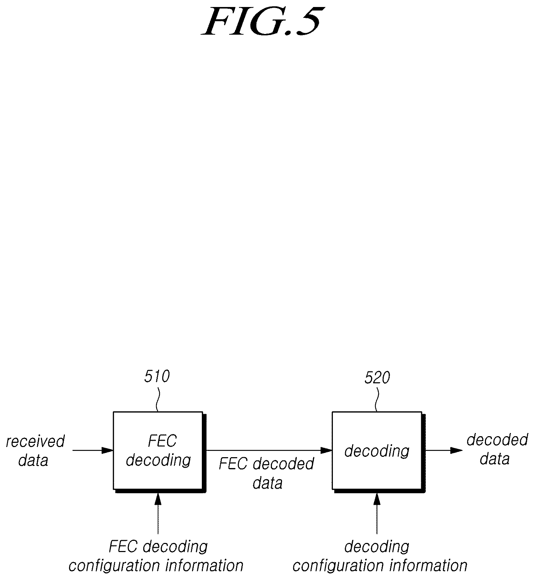

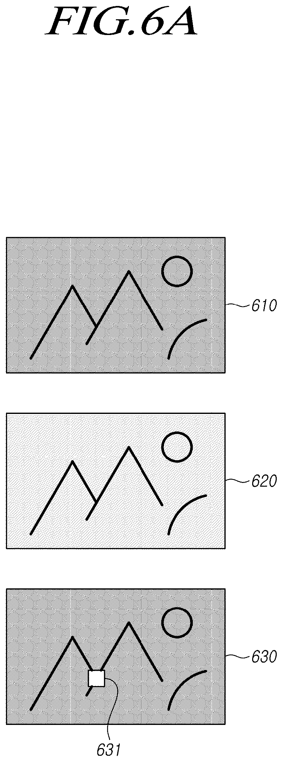

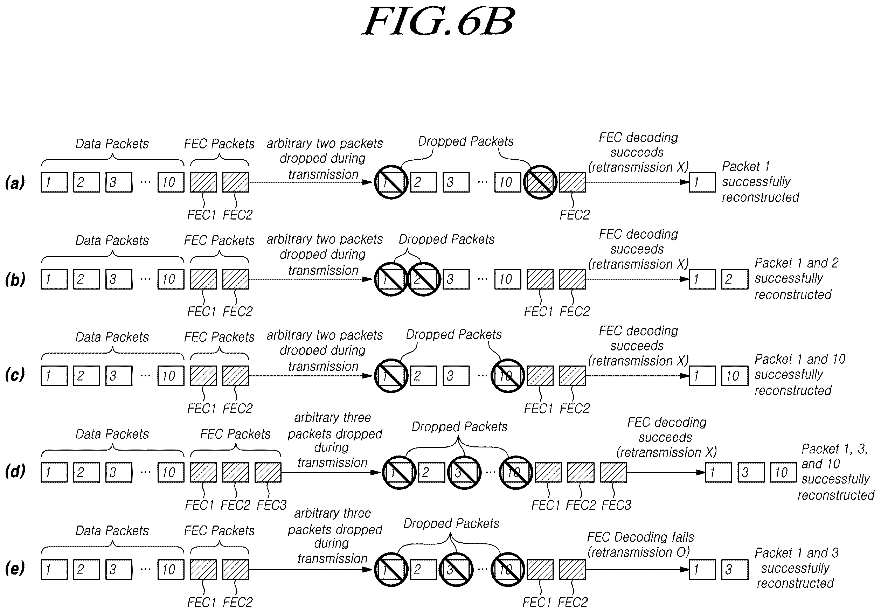

FIG. 5 illustrates a method in which a reception device performs FEC decoding and decoding according to an embodiment of the disclosure. FIG. 6A illustrates examples of an image displayed based on data decoded by a reception device according to an embodiment of the disclosure. FIG. 6B illustrates an example method in which a reception device reconstructs a data packet by performing FEC decoding according to an embodiment of the disclosure.

According to an embodiment, decoding and/or FEC decoding may be performed by a reception device (e.g., the reception device 120 of FIGS. 1 and 3) or a controller (e.g., the controller 125 of FIG. 3) of the reception device.

According to an embodiment, the reception device may receive FEC-encoded data (or FEC packet group). For example, the reception device may receive at least one data packet and at least one FEC packet belonging to the FEC packet group. For example, the reception device may receive at least one data packet transmitted (or processed) based on the transmission rate of data packet and receive at least one FEC packet transmitted (or processed) based on the transmission rate of FEC packet. For the description of the transmission rate of data packet and the transmission rate of FEC packet, a reference may be made to the description of FIG. 4A. Therefore, no duplicate description is given.

According to an embodiment, the FEC decoding and decoding operations of the reception device may be inverse operations (e.g., in reverse order) of the encoding and FEC encoding operations of the transmission device.

Referring to FIG. 5, the reception device may perform an FEC decoding operation 510 and a decoding operation 520. According to an embodiment, the reception device may perform the decoding operation 520 after performing the FEC decoding operation 510.

According to an embodiment, the FEC decoding operation 510 may be an operation performed by the application layer. According to an embodiment, the reception device may perform packet decapsulation of the application layer before performing the FEC decoding operation 510 or after performing the FEC decoding operation 510 and before performing the decoding operation 520.

According to an embodiment, in the FEC decoding operation 510, the reception device may perform FEC decoding on the data received using the FEC decoding configuration information, generating FEC-decoded data. For example, the reception device may reconstruct the source data dropped during transmission through forward error correction using the received repair data.

According to an embodiment, the reception device may reconstruct at least one data packet dropped during transmission, through forward error correction using at least one received FEC packet.

With reference to FIG. 6B, an example process for reconstructing a data packet dropped during transmission using an FEC packet is described hereinafter. In the described example of the disclosure, one FEC packet is used for reconstructing one data packet, but embodiments are not limited thereto. For example, a plurality of FEC packets may be used to reconstruct one data packet or one FEC packet may be used to reconstruct a plurality of data packets according to FEC configurations (e.g., FEC code rate, FEC reconstruction rate, and/or packet size).

The packet group illustrated in (a) to (e) of FIG. 6B may be a packet group for one frame among frames having a frame rate of, e.g., 60fps, but is not limited thereto.

For example, as illustrated in (a) to (c) of FIG. 6B, the transmission device may transmit 10 data packets based on a first data transmission rate (e.g., a transmission rate of transmitting 10 data packets for a predetermined time (e.g., per 1/60 seconds) and transmit two FEC packets based on a first FEC transmission rate (e.g., a transmission rate of transmitting two FEC packets for the predetermined time (e.g., per 1/60 seconds). In this case, e.g., when two packets are dropped during transmission (e.g., as illustrated in (a) of FIG. 6B, when data packet 1 and FEC packet 1 are dropped or, as illustrated in (b) of FIG. 6B, when data packets 1 and 2 are dropped, or as illustrated in (c) of FIG. 6B, data packets 1 and 10 are dropped), the reception device may successfully reconstruct the dropped data packet(s) using the received FEC packet(s)). In other words, the reception device may successfully perform FEC decoding. In this case, the reception device does not request the transmission device to retransmit the dropped data packet.

For example, as illustrated in (d) of FIG. 6B, the transmission device may transmit 10 data packets based on a first data transmission rate (e.g., a transmission rate of transmitting 10 data packets for a predetermined time (e.g., per 1/60 seconds) and transmit three FEC packets based on a second FEC transmission rate (e.g., a transmission rate of transmitting three FEC packets for a predetermined time (e.g., per 1/60 seconds)) higher than the first FEC transmission rate (e.g., a transmission rate of transmitting two FEC packets for a predetermined time (e.g., per 1/60 seconds)) of (a) to (c) of FIG. 6B. In this case, the reception device receives more FEC packets than those in the example of (a) to (c) of FIG. 6B and may thus reconstruct more dropped packets. For example, if three packets are dropped (e.g., as illustrated in (d) of FIG. 6B, when data packets 1, 3, and 10 are dropped), the reception device may successfully reconstruct the three dropped data packets using the three received FEC packets. In other words, the reception device may successfully perform FEC decoding. In this case, the reception device does not request the transmission device to retransmit the dropped data packet.

For example, as illustrated in (e) of FIG. 6B, the transmission device may transmit 10 data packets based on a first data transmission rate (e.g., a transmission rate of transmitting 10 data packets for a predetermined time (e.g., per 1/60 seconds)) and transmit two FEC packets based on a first FEC transmission rate (e.g., a transmission rate of transmitting two FEC packets for a predetermined time (e.g., per 1/60 seconds)) of (a) to (c) of FIG. 6B. In this case, when three packets are dropped (e.g., as illustrated in (e) of FIG. 6B, when data packets 1, 3, and 10 are dropped), the reception device may successfully reconstruct only two dropped data packets using the three received FEC packets but may fail to reconstruct one dropped data packet. In other words, the reception device may not successfully perform FEC decoding. In this case, an image glitch may occur. The reception device may request the transmission device to retransmit the dropped data packet. Or, when latency is critical, the reception device may decode the image with a glitch (e.g., defect or flaw), as is, without retransmission.

The FEC decoding configuration information according to an embodiment may include information corresponding to the FEC encoding configuration information. For example, the FEC decoding configuration information may include, but is not limited to, information about the FEC scheme, information about the FEC rate, information about FEC code rate, and/or information about FEC-related information. For the description of the FEC scheme, FEC rate, FEC code rate, and FEC-related information, a reference may be made to the description made above in connection with FIGS. 4A and 4B. Therefore, no duplicate description is given.

According to an embodiment, in the decoding operation 520, the reception device may decode the FEC-decoded data using the decoding configuration information, thereby generating decoded data. The decoding configuration information may include, e.g., information about an encoding/decoding scheme (e.g., codec information) and information about a bitrate, but is not limited thereto. For the description of the information about encoding/decoding scheme and information about the bitrate, a reference may be made to the description made above in connection with FIGS. 4A and 4B. Therefore, no duplicate description is given.

Referring to FIG. 6A, the reception device may decode an image based on decoded data.

For example, when data packets are transmitted based on a first data transmission rate (or first bitrate), and FEC decoding is successfully performed (e.g., the cases (a) to (c) of FIG. 6B), the reception device may decode a first image 610 having a first image quality (or first video quality) based on the decoded data. According to an embodiment, the first image quality may be an image quality corresponding to the first transmission rate (or first bitrate).

For example, when data packets are transmitted based on the second data transmission rate higher than the first data transmission rate and FEC decoding is successfully performed (e.g., the case (d) of FIG. 6B), the reception device may decode a second image 620 having a second image quality (or second video quality) based on the decoded data. According to an embodiment, the second image quality may be an image quality corresponding to the second transmission rate. For example, when other factors (e.g., resolution, frame rate, compression scheme (e.g., HEVC), etc.) for determining image quality are all the same, the second image quality corresponding to the second data transmission rate (or second bitrate) higher than the first data transmission rate (or first bitrate) may have a better image quality than the first image quality corresponding to the first transmission rate. In other words, when other factors for determining the image quality of an image are the same, the image quality may increase as the transmission rate (or bitrate) of data packets increases.

For example, when the data packets are transmitted based on the first data transmission rate, and FEC decoding is not successfully performed (e.g., the case (e) of FIG. 6B), the reception device may display a third image 630 having a portion 631 of the image corresponding to the dropped packet, not reconstructed, with a glitch (e.g., defect or flaw). According to an embodiment, the glitched portion 631 of the image may be an area corresponding to at least one block in the frame, included in the packet not reconstructed. According to an embodiment, the image quality of the third image 630 may be substantially the same as the first image quality corresponding to the first transmission rate or may be lower than the first image quality.

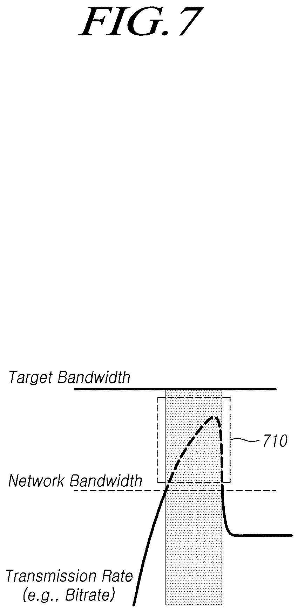

FIG. 7 illustrates an example relationship between a target bandwidth, a network bandwidth, and a packet transmission rate according to an embodiment of the disclosure.

In the embodiment of FIG. 7, the transmission device may use a variable bitrate scheme or an adaptive bitrate scheme. In this case, the transmission device may adaptively adjust the transmission rate of the packet (or the bitrate of the data) according to the context (e.g., status) of the network. For example, in the context where the network is congested, the transmission rate of the packet may be lowered, and in the context where the network environment is good (e.g., low to no latency or low to no congestion), the transmission rate of the packet may be increased to the target bandwidth.

According to an embodiment, the transmission device may adjust the bitrate of the source data on a frame-by-frame basis.

According to an embodiment, when the target bandwidth is set, the transmission device may increase the transmission rate (or the bitrate of data) of the packet up to the target bandwidth. For example, the transmission device may increase the transmission rate of the packet (e.g., the data packet) up to the target bandwidth.

According to an embodiment, as illustrated in FIG. 7, the target bandwidth may be higher than the current network bandwidth. For example, the target bandwidth may have a bandwidth capable of processing N packets for a predetermined time (e.g., a bandwidth capable of processing 20 packets per 1/60 sec) (or 20 Mbps), and the current network bandwidth may have a bandwidth capable of processing M packets fewer than N packets for a predetermined time (e.g., a bandwidth capable of processing 10 packets per 1/60 sec) (or 10 Mbps). When the target bandwidth is higher than the current network bandwidth, the transmission rate (or bitrate of data) of the packet increased to reach the target bandwidth may be higher than the current network bandwidth. In this case, some packets may be dropped during transmission due to the limitation of the network bandwidth. For example, in the section 710 of FIG. 7, in which the transmission rate (or the bitrate of data) of the packet is higher than the current network bandwidth, some of the data packets (or source data) transmitted by the transmission device may be dropped.

According to an embodiment, when the reception device is unable to successfully reconstruct the dropped data packets (or source data) using the FEC packets (or repair data), the image displayed on the reception device may be glitched. For example, as in the third image 630 of FIG. 6A, the image is glitched. when image glitch continuously occurs, the transmission device may decrease the transmission rate (or the bitrate of data) of the packet to less than or equal to the network bandwidth, as illustrated in FIG. 7, so that the image is not glitched. In this case, the image quality of the image decreases again.

Hereinafter, one or more embodiment(s) for adjusting a transmission rate (or a bitrate of source data) of a data packet up to a target bandwidth is/are described. According to an embodiment, adjusting the transmission rate (or the bitrate of the source data) of the data packet up to the target bandwidth may include increasing the transmission rate (or the bitrate of the source data) of the data packet up to the maximum configurable transmission rate (or the bitrate) within the set target bandwidth.

According to an embodiment, the transmission device may adjust the transmission rate (or the bitrate of the source data) of the data packet up to the target bandwidth based on the transmission rate adjustment mode. The transmission rate adjustment mode may include, e.g., at least one of a first transmission rate adjustment mode or a second transmission rate adjustment mode.

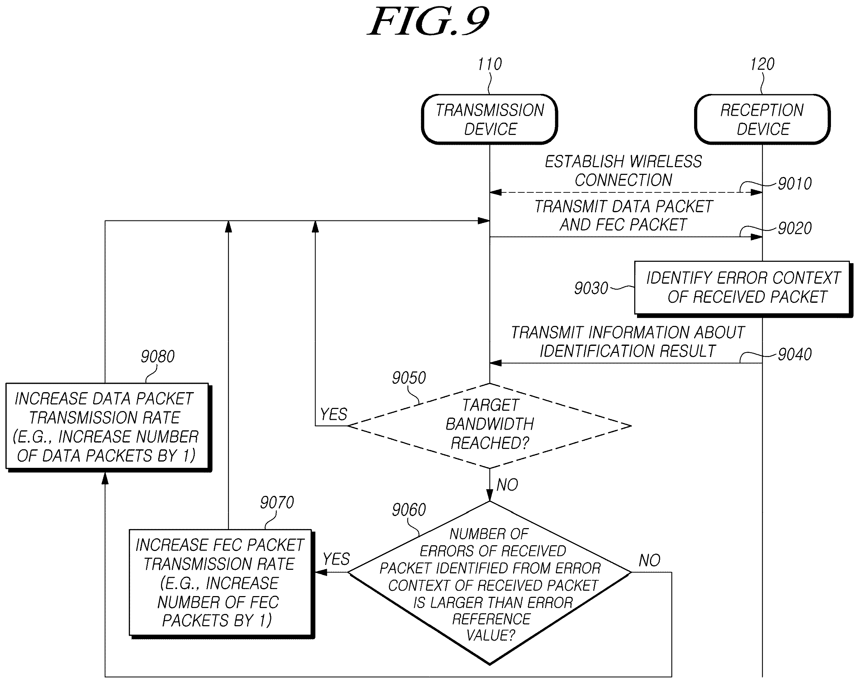

According to an embodiment, the first transmission rate adjustment mode may be a transmission rate adjustment mode including the operation in which the transmission device determines whether to increase the transmission rate (or the bitrate of source data) of the data packet for the next FEC packet group (or next FEC encoded data) using information related to the reception error for the FEC packet group (or FEC encoded data) of the reception device (hereinafter, referred to as reception error information). For example, the first transmission rate adjustment mode may be a transmission rate adjustment mode including an operation in which the transmission device determines whether to increase the transmission rate of data packet (or bitrate of source data) for the next FEC packet group (or next FEC encoded data) based on the reception error information of the reception device according to first increasing the transmission rate of FEC packet (or FEC rate of repair data or FEC size of repair data) for the FEC packet group (or FEC encoding data) and transmitting it. Embodiments associated with the first transmission rate adjustment mode are described below, e.g., with reference to FIGS. 9 to 15B.

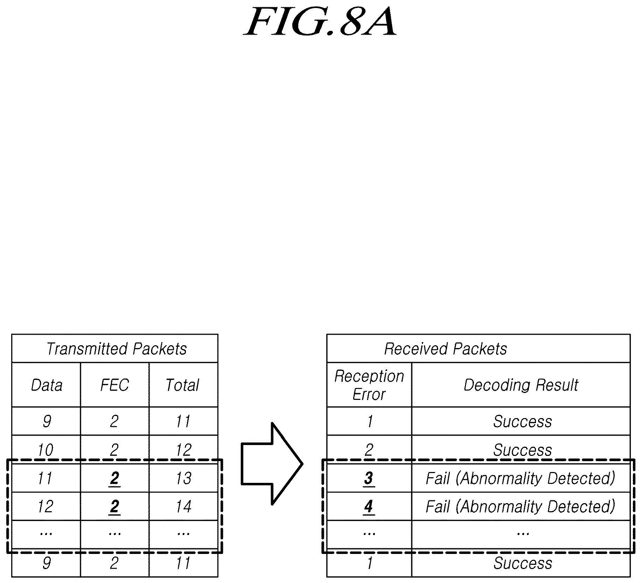

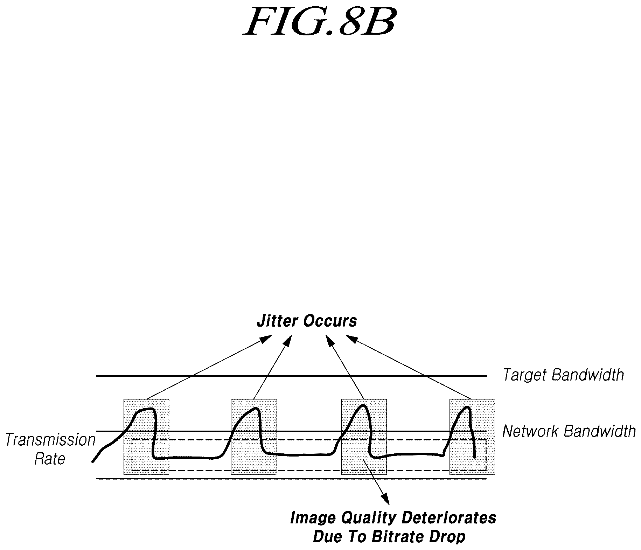

According to an embodiment, the second transmission rate adjustment mode may be a transmission rate adjustment mode including an operation in which the transmission device first increases the transmission rate of the data packet (or bitrate of source data) for the next FEC packet group (or next FEC encoded data) without using the reception error information for the FEC packet group (or FEC encoded data) of the reception device. For example, the second transmission rate adjustment mode may be a transmission rate adjustment mode including an operation in which the transmission device first increases the transmission rate of data packet (or bitrate of source data) for the next FEC packet group (or next FEC encoded data) without using the reception error information of the reception device according to first increasing the transmission rate of FEC packet (or FEC rate of repair data or FEC size of repair data) for the FEC packet group (or FEC encoding data) and transmitting it. Embodiments associated with the second transmission rate adjustment mode are described below, e.g., with reference to FIGS. 8A and 8B.

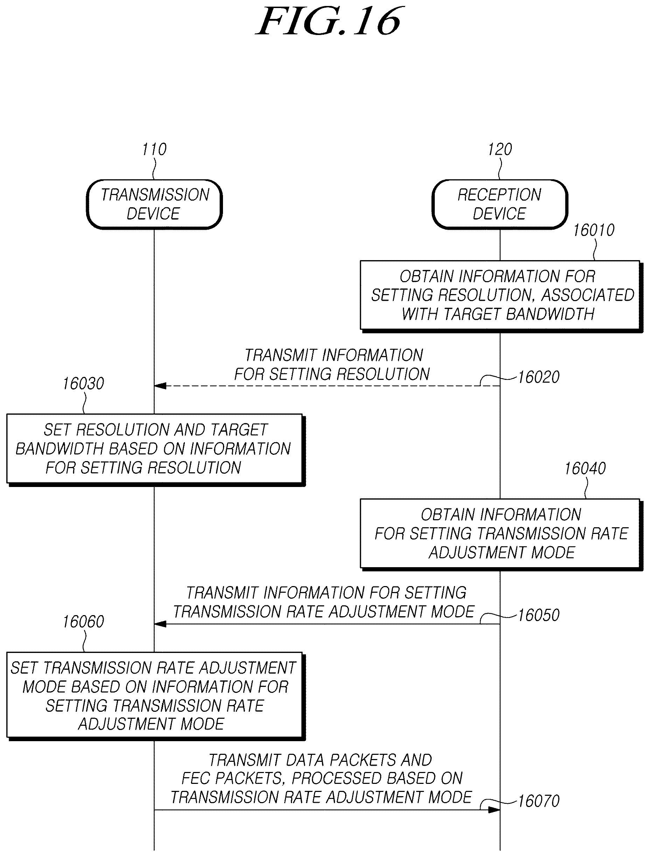

According to an embodiment, the transmission device may set (or configure) the first transmission rate adjustment mode to a default transmission rate adjustment mode. According to an embodiment, the transmission device may selectively set one of the first transmission rate adjustment mode or the second transmission rate adjustment mode. For example, the transmission device may selectively set one of the first transmission rate adjustment mode or the second transmission rate adjustment mode, based on a user input of the reception device. Embodiments related to the selective setting of the transmission rate adjustment mode are described below with reference to FIGS. 16 to 18.

FIG. 8A illustrates an example packet transmission/reception context according to a transmission rate adjustment procedure according to an embodiment of the disclosure. FIG. 8B illustrates an example change in data packet transmission rate according to a transmission rate adjustment procedure according to an embodiment of the disclosure.

The transmission rate adjustment procedure of the embodiments of FIGS. 8A and 8B may be, e.g., a procedure for adjusting the transmission rate of the data packet up to the target bandwidth according to the second transmission rate adjustment mode.

According to an embodiment, the transmission device (e.g., the transmission device 110 of FIGS. 1 and 2) may transmit at least one data packet to the reception device (e.g., the reception device 120 of FIGS. 1 and 3) based on the first data transmission rate and may transmit at least one FEC packet based on the second FEC transmission rate. For a description of the transmission of the data packet and the FEC packet, a reference may be made to the description of FIGS. 4A and 4B. Therefore, no duplicate description is given.

According to an embodiment, the reception device may perform FEC decoding and decoding on an FEC packet group (transmission packet group) including at least one data packet transmitted (or processed) based on the transmission rate of the data packet and at least one FEC packet transmitted (or processed) based on the transmission rate of the FEC packet. One FEC packet group may correspond to, e.g., one frame. Further, the reception device may display an image based on the decoded data. For a description of FEC decoding, decoding, and image display, a reference may be made to the description of FIGS. 5 to 6B. Therefore, no duplicate description is given.

According to an embodiment, the reception device may identify a reception error (or abnormality) of the reception packet.

According to an embodiment, the reception device may identify the number of packets in which a reception error (e.g., packet drop) occurs within the FEC packet group including the at least one data packet transmitted based on the transmission rate of the data packet and the at least one FEC packet transmitted based on the transmission rate of the FEC packet. For example, the reception device 120 may identify a number of packets in which a reception error occurs within the corresponding FEC packet group. The number of packets in which the reception error occurs may be, e.g., the sum of the number of data packets dropped and the number of dropped FEC packets in the corresponding FEC packet group. Alternatively, the number of packets in which the reception error occurs may be, e.g., the number of data packets dropped in the corresponding FEC packet group.

According to an embodiment, the reception device may identify the number of packets (e.g., the number of dropped packets) in which the reception error occurs, based on FEC-related information (e.g., total packet number information for the corresponding FEC packet group, data packet number information, and/or FEC packet number information) for the corresponding FEC packet group transmitted from the transmission device. For the FEC-related information and the operation in which the reception device identifies the number of packets in which a reception error occurs based on the FEC-related information, a reference may be made to the above description (e.g., FIGS. 4A to 6B). Therefore, no duplicate description is given.

According to an embodiment, the reception device may identify whether the number of packets in which the reception error occurs is equal to or smaller than a preset error reference value (error reference value) (e.g., 2). When the number of packets in which the reception error occurs is smaller than or equal to the error reference value, the reception device 120 may identify that the reception error (or abnormality) for the corresponding FEC packet group is not detected. When the number of packets in which the reception error occurs exceeds the error reference value, the reception device may identify that the reception error (or abnormality) for the corresponding FEC packet group is detected.

Hereinafter, an example of transmission and reception of packets according to a transmission rate adjustment procedure based on a second transmission rate adjustment mode is described with reference to FIGS. 8A and 8B. In the embodiments of FIGS. 8A and 8B, the transmission rate is the number of packets transmitted for a predetermined time, and the network bandwidth and the target bandwidth are bandwidths capable of processing, e.g., 10 packets and 20 packets for a predetermined time, respectively. For the operation of reconstructing the data packet based on the FEC packet, a reference may be made to, e.g., the description of FIG. 6B.

According to an embodiment, each FEC packet group of FIG. 8A may correspond to each frame. For example, the FEC packet group 1 may correspond to the first frame, and the FEC packet group 2 transmitted after the FEC packet group 1 may correspond to the second frame following the first frame.

First, the packet transmission/reception process of the first FEC packet group (e.g., the FEC packet group corresponding to the first frame) of FIG. 8A is described. The transmission device may transmit FEC packet group 1 having a total of 11 packets including nine (9) data packets and two (2) associated FEC packets for a predetermined time (e.g., for 1/60 seconds of 60 fps), and the reception device may receive the FEC packet group 1. In this case, due to the limitation of the network bandwidth, one packet may be dropped during transmission. However, since the number of dropped packets is within the number reconstructable by the FEC packets, decoding of the data packets may be successfully performed. Accordingly, the reception device may identify that the number of packets in which the reception error occurs is one (1) and that the decoding result is successful. The reception device may display an image based on the decoded data for the FEC packet group 1. Since decoding succeeds, the displayed image has no image glitch or image quality deterioration, and may have a first image quality corresponding to the transmission rate of the data packet of FEC packet group 1. For example, the displayed image may be a first image 610 of FIG. 6A.

A packet transmission/reception process of a second FEC packet group (e.g., an FEC packet group corresponding to a second frame following the first frame) of FIG. 8A is described. Since the target bandwidth has not yet been reached, the transmission device increases the transmission rate of the data packet. For example, as illustrated in FIG. 8A, in order to increase the transmission rate of the data packet, the transmission device increases the number of data packets transmitted for a predetermined time (e.g., for 1/60 second of 60 fps) by 1 compared to the previous FEC packet group 1. The transmission device may transmit FEC packet group 2 having a total of 12 packets including 10 data packets and two (2) associated FEC packets for a predetermined time, and the reception device may receive the FEC packet group 2. In this case, due to the limitation of the network bandwidth, two (2) packets may be dropped during transmission. However, since the number of dropped packets is within the number reconstructable by the FEC packets, decoding of the data packets may be successfully performed. Accordingly, the reception device may identify that the number of packets in which the reception error occurs is two (2) and that the decoding result is successful. The reception device may display an image based on the decoded data for the FEC packet group 2. Since decoding is successful, the displayed image has no image glitch or image quality deterioration and may have a second image quality corresponding to the transmission rate of the data packet of FEC packet group 2. For example, the displayed image may be a second image 620 of FIG. 6A.

A packet transmission/reception process of a third FEC packet group (e.g., an FEC packet group corresponding to a third frame following the second frame) of FIG. 8A is described. Since the target bandwidth has not yet been reached, the transmission device again increases the transmission rate of the data packet. For example, as illustrated in FIG. 8A, in order to increase the transmission rate of the data packet, the transmission device increases the number of data packets transmitted for a predetermined time (e.g., for 1/60 second of 60 fps) by one (1), compared to the previous FEC packet group 2. The transmission device may transmit FEC packet group 3 having a total of 13 packets including 11 data packets and two (2) associated FEC packets for a predetermined time, and the reception device may receive the FEC packet group 3. In this case, due to the limitation of the network bandwidth, three (3) packets may be dropped during transmission. However, since the number of dropped packets exceeds the number reconstructable by the FEC packets, decoding of the data packets may not be successfully performed. Accordingly, the reception device may identify that the number of packets in which the reception error occurs is three (3) and that the decoding result fails. The reception device may display an image based on the decoded data for the FEC packet group 3. Since the decoding fails, the display image has an image glitch or image quality deterioration. For example, the displayed image may have an image glitch like the third image 630 of FIG. 6A.

A packet transmission/reception process of a fourth FEC packet group (e.g., an FEC packet group corresponding to a fourth frame following the third frame) of FIG. 8A is described. Since the target bandwidth has not yet been reached, the transmission device again increases the transmission rate of the data packet. For example, as illustrated in FIG. 8A, in order to increase the transmission rate of the data packet, the transmission device increases the number of data packets transmitted for a predetermined time (e.g., for 1/60 second of 60 fps) by one (1), compared to the previous FEC packet group 3. The transmission device may transmit FEC packet group 4 having a total of 14 packets including 12 data packets and two (2) associated FEC packets for a predetermined time, and the reception device may receive the FEC packet group 4. In this case, due to the limitation of the network bandwidth, four (4) packets may be dropped during transmission. However, since the number of dropped packets exceeds the number reconstructable by the FEC packets, decoding of the data packets may not be successfully performed. Accordingly, the reception device may identify that the number of packets in which the reception error occurs is four (4) and that the decoding result fails. The reception device may display an image based on the decoded data for the FEC packet group 4. Since decoding fails, the display image has an image glitch or image quality deterioration. For example, the displayed image may have an image glitch like the third image 630 of FIG. 6A.

A packet transmission/reception process of a fifth FEC packet group (e.g., an FEC packet group corresponding to a fifth frame following the fourth frame) of FIG. 8A is described. Although the target bandwidth has not been yet reached, if decoding failure occurs consecutively (e.g., when decoding failure occurs a preset number of times (e.g., three (3)) or more), the transmission device may decrease the transmission rate of the data packet. For example, as illustrated in FIG. 8A, the transmission device may adjust the transmission rate of the data packet to the default transmission rate (e.g., the previous transmission rate of FEC packet group 1). The transmission device may transmit FEC packet group 5 having a total of 11 packets including 9 data packets and two (2) associated FEC packets for a predetermined time, and the reception device may receive the FEC packet group 5. In this case, due to the limitation of the network bandwidth, one (1) packet may be dropped during transmission. However, since the number of dropped packets is within the number reconstructable by the FEC packets, decoding of the data packets may not be successfully performed. Accordingly, the reception device may identify that the number of packets in which the reception error occurs is 1 (one) and that the decoding result is successful. The reception device may display an image based on the decoded data for the FEC packet group 5. Since decoding succeeds, the displayed image has no image glitch or image quality deterioration and may have a first image quality corresponding to the transmission rate of the data packet of FEC packet group 5. For example, the displayed image may be a first image 610 of FIG. 6A.

As in the above-described example, when the transmission rate is adjusted according to the second transmission rate adjustment mode, if it is identified that the target bandwidth has not been yet reached, the transmission device may first increase the transmission rate of the data packet for the corresponding FEC packet group regardless of the number of packets where a reception error occurs for the previous FEC packet group and the decoding result (e.g., whether decoding is successfully performed). In this case, in the section (e.g., the section 710 of FIG. 7 or the section boxed in solid line of FIG. 8B) in which the transmission rate of the data packet is higher than the network bandwidth, a jitter (or packet drop) for the data packet may occur. This drops the transmission rate (e.g., bitrate) of data packets as in the section shown in dashed line of FIG. 8B, causing a glitch or image quality deterioration in the image displayed by the reception device. Therefore, a need may arise for considering a method for adjusting the transmission rate of the data packet up to the target bandwidth without causing, e.g., image glitch or image quality deterioration to address such issues.

FIG. 9 illustrates a transmission rate adjustment procedure according to an embodiment of the disclosure.

The transmission rate adjustment procedure according to the embodiment of FIG. 9 may be a procedure for adjusting (e.g., increasing) the transmission rate of the data packet (or bitrate of source data) up to the target bandwidth according to, e.g., the first transmission rate adjustment mode.

One operation cycle of operations 9020 to 9080 of FIG. 9 may be an operation cycle corresponding to, e.g., one frame.

Referring to FIG. 9, in operation 9010, the transmission device 110 and the reception device 120 may establish a wireless connection. According to an embodiment, the transmission device 110 and the reception device 120 may negotiate parameter(s) for establishing a wireless connection. According to an embodiment, the transmission device 110 and the reception device 120 may transmit/receive FEC-related information for using the FEC. According to an embodiment, operation 9010 may be omitted.

In operation 9020, the transmission device 110 may transmit an FEC packet group including at least one data packet and at least one FEC packet for error correction for the at least one data packet to the reception device 120. According to an embodiment, the transmission device 110 may transmit, to the reception device 120, at least one data packet at the rate of transmission of the data packet and at least one FEC packet at the rate of transmission of the FEC packet. For a description of the transmission of the data packet and transmission of the FEC packet, a reference may be made to the description of FIGS. 4A and 4B. Therefore, no duplicate description is given.

In operation 9030, the reception device 120 may identify an error context of the received packet.

According to an embodiment, the reception device 120 may identify the number of packets in which a reception error (e.g., packet drop) occurs within the FEC packet group including the at least one data packet transmitted (or processed) based on the transmission rate of the data packet and the at least one FEC packet transmitted (or processed) based on the transmission rate of the FEC packet. For example, the reception device 120 may identify the number of packets in which a reception error occurs within the corresponding FEC packet group. The number of packets in which the reception error occurs may be, e.g., the sum of the number of data packets dropped and the number of dropped FEC packets in the corresponding FEC packet group.

According to an embodiment, the reception device 120 may identify the number of packets (e.g., the number of dropped packets) in which the reception error occurs, based on FEC-related information (e.g., total packet number information for the corresponding FEC packet group, data packet number information, and/or FEC packet number information) for the corresponding FEC packet group transmitted from the transmission device 110. For transmission of the FEC-related information and the operation in which the reception device 120 identifies the number of packets in which a reception error occurs based on the FEC-related information, a reference may be made to the above description (e.g., FIGS. 4A to 6B). Therefore, no duplicate description is given.

According to an embodiment, the reception device 120 may identify whether the number of packets in which the reception error occurs is equal to or smaller than a preset error reference value (error reference value). When the number of packets in which the reception error occurs is smaller than or equal to the error reference value, the reception device 120 may identify that the reception error (or abnormality) for the corresponding FEC packet group is not detected. When the number of packets in which the reception error occurs exceeds the error reference value, the reception device 120 may identify that the reception error (or abnormality) for the corresponding FEC packet group is detected. According to an embodiment, when the reception device 120 determines whether a reception error (or abnormality) for the corresponding FEC packet group is detected, the reception device 120 may directly transmit information indicating whether a reception error is detected to the transmission device 110. Otherwise, the reception device 120 may transmit only information indicating the number of packets in which a reception error occurs to the transmission device 110.

In operation 9040, the reception device 120 may transmit information about the result of identifying the error context (reception error context) of the received packet. According to an embodiment, the information about the result of identifying the error context of the reception packet may include reception error information.

According to an embodiment, the reception error information may include information indicating the number of packets in which a reception error occurs (hereinafter, referred to as 'error packet number information') or information indicating whether the number of packets in which a reception error occurs is smaller than or equal to a preset error reference value (or information indicating whether a reception error is detected) (hereinafter, referred to as 'error context information') in the FEC packet group.

In operation 9050, the transmission device 110 may identify whether the target bandwidth is reached. According to an embodiment, the transmission device 110 may identify whether the transmission rate of the data packet (or the transmission rate of the FEC packet group) is smaller than the target bandwidth and may identify whether the target bandwidth is reached. For example, the transmission device 110 may identify whether the transmission rate of the data packet reaches the maximum configurable transmission rate in the target bandwidth and identify whether the transmission rate of the data packet reaches the target bandwidth.

For example, when the transmission rate of the data packet is less than the target bandwidth (or is less than the transmission rate of the maximum configurable data packet in the target bandwidth), the transmission device may identify that the target bandwidth is not reached. When the transmission rate of the data packet (or the transmission rate of the FEC packet group) is larger than or equal to the target bandwidth (or larger than or equal to the maximum configurable transmission rate in the target bandwidth), the transmission device may identify that the target bandwidth is reached. Operation 9050 may be omitted according to an embodiment. Alternatively, operation 9050 may be performed before operation 9040.

When it is identified that the target bandwidth has not been reached, operation 9060 may be performed.

In operation 9060, the transmission device 110 may identify the error context of the received packet to identify whether the number of errors of the received packet is larger than the error reference value (error reference value). The number of errors in the received packet may correspond to, e.g., the number of packets in which the reception error occurs.

According to an embodiment, the transmission device 110 may identify whether the number of packets in which the reception error occurs is larger than the preset error reference value (error reference value), based on the reception error information. When it is identified that the number of packets in which the reception error occurs is larger than the error reference value (e.g., when it is identified that the number of packets in which the reception error occurs exceeds the error reference value), operation 9070 may be performed. When it is identified that the number of packets in which the reception error occurs is equal to or smaller than the error reference value (e.g., when it is identified that the number of packets in which the reception error occurs is equal to or smaller than the error reference value), operation 9080 may be performed.

In operation 9070, the transmission device 110 may increase the transmission rate of the FEC packet. For example, when it is identified that the number of packets in which the reception error occurs exceeds the error reference value, the transmission device 110 may set the transmission rate of the FEC packet for the corresponding transmission packet group or the FEC code rate associated with the transmission rate of the FEC packet to a value at which all of the at least one data packet dropped in the corresponding transmission packet group are reconstructable using at least one of the plurality of FEC packets transmitted based on the transmission rate of the corresponding FEC packet. For example, if it is identified that the number of packets in which the reception error occurs exceeds the error reference value, the transmission device 110 may increase the number of FEC packets transmitted for a predetermined time by a predetermined number (e.g., one (1)). In this case, the transmission device 110 may perform operation 9020 again based on the increased transmission rate of the FEC packet. In this case, the transmission rate of the data packet may be maintained. For example, the transmission device 110 may transmit at least one data packet for the corresponding FEC packet group based on the same transmission rate of the data packet as the transmission rate of the data packet for the previous FEC packet group and transmit at least one FEC packet for the corresponding FEC packet group based on the transmission rate of the FEC packet, increased compared with the transmission rate of the FEC packet for the previous FEC packet group.

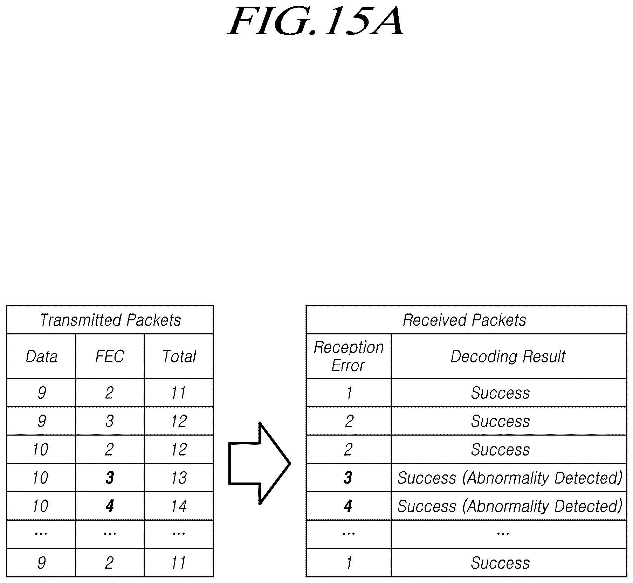

In operation 9080, the transmission device 110 may increase the transmission rate of the data packet. For example, when it is identified that the number of packets in which the reception error occurs is the error reference value or less, the transmission device 110 may set the transmission rate of the data packet for the corresponding transmission packet group or the bitrate of source data associated with the transmission rate of the data packet to a value at which all of the at least one data packet dropped in the corresponding transmission packet group are reconstructable using at least one of the plurality of FEC packets transmitted based on the default FEC transmission rate (e.g., a transmission rate at which two FEC packets are transmitted for a predetermined time of FIG. 15A).

For example, when it is identified that the number of packets in which a reception error occurs is the error reference value or less, the transmission device 110 may increase the number of data packets transmitted for a predetermined time by a preset time (e.g., one (1)). In this case, the transmission device 110 may again perform (e.g., repeat) operation 9020 based on the increased data packet transmission rate. In this case, the transmission rate of the FEC packet may be maintained. For example, the transmission device 110 may transmit at least one data packet for the corresponding FEC packet group based on the data packet transmission rate increased compared with the data packet transmission rate for the previous FEC packet group and transmit at least one FEC packet for the corresponding FEC packet group based on the same FEC packet transmission rate as the FEC packet transmission rate (e.g., default FEC packet transmission rate) for the previous FEC packet group. Thereafter, operations 9030 to 9080 may be performed again. Operations 9020 to 9080 may be repeatedly performed until the data packet transmission rate reaches the target bandwidth.

When it is identified that the data packet transmission rate reaches the target bandwidth, operation 9020 may be performed again (e.g., repeated) without performing operation 9060. This is why in this case, the transmission device 110 need not adjust the data packet transmission rate to reach the target bandwidth. Accordingly, the transmission device 110 may transmit at least one data packet for the corresponding FEC packet group based on the same data packet transmission rate as the data packet transmission rate for the previous FEC packet group and transmit at least one FEC packet for the corresponding FEC packet group based on the same FEC packet transmission rate as the FEC packet transmission rate for the previous FEC packet group.

As described above, in the transmission rate adjustment procedure of FIG. 9 which uses the first transmission rate adjustment mode, unlike the transmission rate adjustment procedure using the second transmission rate adjustment mode, when the target bandwidth is not reached, instead of immediately increasing the data packet transmission rate, the transmission device 110 determines whether to increase the data packet transmission rate for the corresponding FEC packet group using the reception error information for the previous FEC packet group received from the reception device 120. Thus, it is possible to stably (e.g., steadily or incrementally) increase the data packet transmission rate up to the target bandwidth without image glitch or deterioration of image quality.

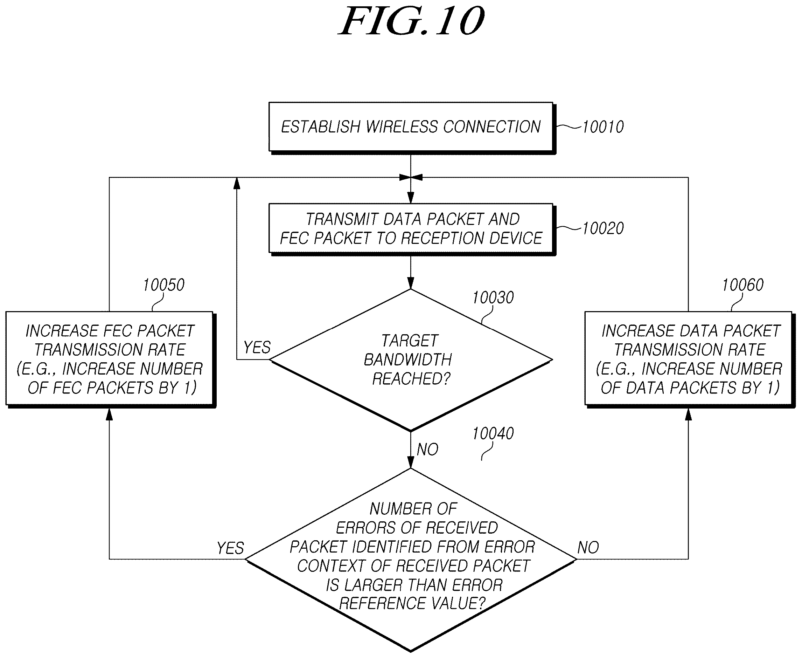

FIG. 10 illustrates operations of a transmission device in a transmission rate adjustment procedure according to an embodiment of the disclosure.

The transmission rate adjustment procedure of the embodiment of FIG. 10 may be, e.g., a procedure for adjusting (e.g., increasing) the transmission rate of the data packet up to the target bandwidth according to, e.g., the first transmission rate adjustment mode.

Referring to FIG. 10, in operation 10010, a transmission device (e.g., the transmission device 110 of FIGS. 1 and 2) may establish a wireless connection with a reception device (e.g., the reception device 120 of FIGS. 1 and 3). For the description of operation 10010, a reference may be made to the description of operation 9010. Therefore, no duplicate description is given. According to an embodiment, operation 10010 may be omitted.

In operation 10020, the transmission device 110 may transmit an FEC packet group including at least one data packet and at least one FEC packet for error correction for the at least one data packet to the reception device 120. For the description of operation 10020, a reference may be made to the description of operation 9020. Therefore, no duplicate description is given.

According to an embodiment, the transmission device 110 may transmit, to the reception device 120, at least one data packet based on the data packet transmission rate and transmit at least one FEC packet based on the FEC packet transmission rate. For example, as illustrated in the transmission/reception process of the second FEC packet group of FIG. 15A, the transmission device 110 may transmit FEC packet group 2 having a total of 12 packets including 9 data packets and three (3) associated FEC packets for a predetermined time. For example, as illustrated in the transmission/reception process of the fourth FEC packet group of FIG. 15A, the transmission device 110 may transmit FEC packet group 4 having a total of 13 packets including 10 data packets and three (3) associated FEC packets for a predetermined time.

In operation 10030, the transmission device 110 may identify whether the target bandwidth is reached. For the description of operation 10030, a reference may be made to the description of operation 9050. Therefore, no duplicate description is given. Operation 10030 may be omitted according to an embodiment. Alternatively, operation 10030 may be performed before operation 10020.

When it is identified that the target bandwidth has not been reached, operation 10040 may be performed.

In operation 10040, the transmission device 110 may identify the error context of the received packet to identify whether the number of errors of the received packet is larger than the error reference value (error reference value). For the description of operation 10040, a reference may be made to the description of operation 9060. Therefore, no duplicate description is given.

According to an embodiment, when it is identified that the number of packets in which a reception error occurs is larger than an error reference value (e.g., when it is identified that the number of packets in which a reception error occurs exceeds the error reference value), operation 10050 may be performed. For example, as illustrated in the transmission/reception process of the fourth FEC packet group of FIG. 15A, the transmission device 110 may identify that the number (e.g., three (3)) of packets in which a reception error occurs is larger than the error reference value (e.g., two (2)) based on the reception error information for FEC packet group 4 received from the reception device 120.

According to an embodiment, when it is identified that the number of packets in which a reception error occurs is equal to or smaller than the error reference value (e.g., when it is identified that the number of packets in which a reception error occurs is the error reference value or less), operation 10060 may be performed. For example, as illustrated in the transmission/reception process of the second FEC packet group of FIG. 15A, the transmission device 110 may identify that the number (e.g., two (2)) of packets in which a reception error occurs is the error reference value (e.g., two (2)) or less based on the reception error information for FEC packet group 2 received from the reception device 120.

In operation 10050, the transmission device 110 may increase the transmission rate of the FEC packet. For the description of operation 10050, a reference may be made to the description of operation 9070. Therefore, no duplicate description is given.

According to an embodiment, when it is identified that the number of packets in which a reception error occurs exceeds the error reference value, the transmission device 110 may increase the number of FEC packets transmitted for a predetermined time by a preset time (e.g., one (1)). In this case, the transmission device 110 may perform operation 10020 again based on the increased transmission rate of the FEC packet. In this case, the transmission rate of the data packet may be maintained. For example, the transmission device 110 may transmit at least one data packet for the corresponding FEC packet group based on the same transmission rate of the data packet as the transmission rate of the data packet for the previous FEC packet group and transmit at least one FEC packet for the corresponding FEC packet group based on the transmission rate of the FEC packet, increased compared with the transmission rate of the FEC packet for the previous FEC packet group. For example, since it is identified that the number (e.g., three (3)) of packets in which a reception error occurs in previous FEC packet group 4 exceeds the error reference value (e.g., two (2)), as illustrated in the transmission/reception process of the fifth FEC packet group of FIG. 15A, the transmission device 110 may transmit FEC packet group 5 having a total of 14 packets including 10 data packets and four (4) associated FEC packets for a predetermined time.

In operation 10060, the transmission device 110 may increase the transmission rate of the data packet. For the description of operation 10060, a reference may be made to the description of operation 9080. Therefore, no duplicate description is given.

According to an embodiment, when it is identified that the number of packets in which a reception error occurs is the error reference value or less, the transmission device 110 may increase the number of data packets transmitted for a predetermined time by a preset time (e.g., one (1)). In this case, the transmission device 110 may again perform operation 10020 based on the increased data packet transmission rate. In this case, the FEC packet transmission rate may be maintained (e.g., maintained as the default transmission rate). For example, the transmission device 110 may transmit at least one data packet based on the data packet transmission rate increased compared with the data packet transmission rate for the previous FEC packet group and transmit at least one FEC packet based on the same FEC packet transmission rate as the FEC packet transmission rate for the previous FEC packet group. For example, since it is identified that the number (e.g., two (2)) of packets in which a reception error occurs in previous FEC packet group 2 is the error reference value (e.g., two (2)) or less, as illustrated in the transmission/reception process of the third FEC packet group of FIG. 15A, the transmission device 110 may transmit FEC packet group 3 having a total of 12 packets including 10 data packets and two (2) associated FEC packets for a predetermined time.

Operations 10020 to 10060 may be repeatedly performed until the data packet transmission rate reaches the target bandwidth.

When it is identified that the data packet transmission rate reaches the target bandwidth, operation 10020 may be performed again without performing operation 10040. In this case, the transmission device 110 may transmit at least one data packet based on the same data packet transmission rate as the data packet transmission rate for the previous FEC packet group and transmit at least one FEC packet based on the same FEC packet transmission rate as the FEC packet transmission rate for the previous FEC packet group. Thereafter, operations 10030 to 10060 may be performed again.

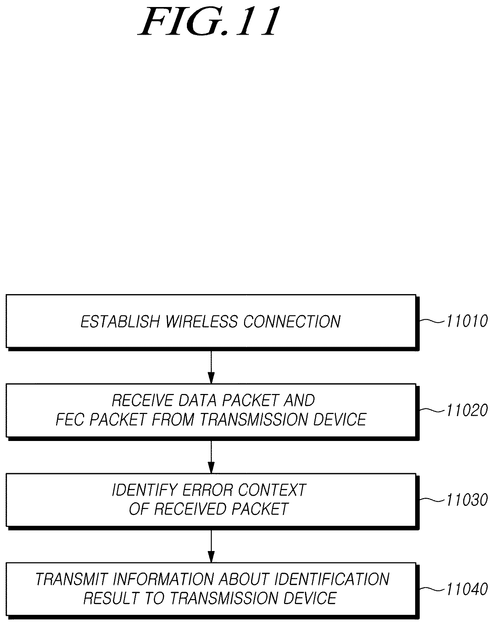

FIG. 11 illustrates operations of a reception device in a transmission rate adjustment procedure according to an embodiment of the disclosure.

The transmission rate adjustment procedure of the embodiment of FIG. 11 may be, e.g., a procedure for adjusting (e.g., increasing) the transmission rate of the data packet up to the target bandwidth according to, e.g., the first transmission rate adjustment mode.

Referring to FIG. 11, in operation 11010, a reception device (e.g., the reception device 120 of FIGS. 1 and 3) may establish a wireless connection with a transmission device (e.g., the transmission device 110 of FIGS. 1 and 2). For the description of operation 11010, a reference may be made to the description of operation 9010. Therefore, no duplicate description is given. According to an embodiment, operation 11010 may be omitted.

In operation 11020, the reception device 120 may receive, from the transmission device 110, an FEC packet group including at least one data packet and at least one FEC packet for error correction for at least one data packet. For the description of operation 11020, a reference may be made to the description of operation 9020. Therefore, no duplicate description is given.

According to an embodiment, the reception device 120 may receive, from the transmission device 110, at least one data packet transmitted based on the data packet transmission rate and receive at least one FEC packet transmitted based on the FEC packet transmission rate. For example, as illustrated in the transmission/reception process of the second FEC packet group of FIG. 15A, the reception device 120 may receive FEC packet group 2 having a total of 11 packets including nine (9) data packets and two (2) associated FEC packets for a predetermined time. For example, as illustrated in the transmission/reception process of the fourth FEC packet group of FIG. 15A, the reception device 120 may receive FEC packet group 4 having a total of 13 packets including 10 data packets and three (3) associated FEC packets for a predetermined time.

In operation 11030, the reception device 120 may identify an error context of the received packet. For the description of operation 11030, a reference may be made to the description of operation 9030. Therefore, no duplicate description is given.

For example, as illustrated in the transmission/reception process of the second FEC packet group of FIG. 15A, due to the limitation of the network bandwidth, two (2) packets are dropped during transmission, but since the number of dropped packets is within the number reconstructable by the FEC packets, decoding of data packets may be successfully performed. The reception device 120 may identify that the number of packets in which a reception error occurs is two (2) and the decoding result is successful. The reception device 120 may generate reception error information for FEC packet group 2 based on identifying the error context of the received packet. The reception error information for FEC packet group 2 may include information indicating the number (e.g., two (2)) of packets in which a reception error occurs in FEC packet group 2 or information indicating that the number (e.g., two (2)) of packets in which a reception error occurs is a preset error reference value (e.g., two (2)) or less (or information indicating that no reception error is detected).

For example, as illustrated in the transmission/reception process of the fourth FEC packet group of FIG. 15A, due to the limitation of the network bandwidth, three packets are dropped during transmission, but since the number of dropped packets is within the number reconstructable by the FEC packets, decoding of data packets may be successfully performed. The reception device 120 may identify that the number of packets in which a reception error occurs is three (3) and the decoding result is successful. The reception device 120 may generate reception error information for FEC packet group 4 based on identifying the error context of the received packet. The reception error information for FEC packet group 4 may include information indicating the number (e.g., three (3)) of packets in which a reception error occurs in FEC packet group 4 or information indicating that the number (e.g., three (3)) of packets in which a reception error occurs exceeds the preset error reference value (e.g., two (2)) or less (or information indicating that a reception error is detected).

In operation 11040, the reception device 120 may transmit information (reception error information) about the identification result for the error context of the received packet. For the description of operation 11030, a reference may be made to the description of operation 9030. Therefore, no duplicate description is given.

For example, as illustrated in the transmission/reception process of the second FEC packet group of FIG. 15A, the reception device 120 may transmit the reception error information for FEC packet group 2.

For example, as illustrated in the transmission/reception process of the fourth FEC packet group of FIG. 15A, the reception device 120 may transmit the reception error information for FEC packet group 4.

According to an embodiment, before operation 11040 or after operation 11040, the reception device 120 may display an image based on the decoded data.

For example, as illustrated in the transmission/reception process of the second FEC packet group of FIG. 15A, the reception device 120 may display an image based on the decoded data for FEC packet group 2. Since decoding was successful, the displayed image has no image glitch or image quality deterioration and may have a first image quality corresponding to the transmission rate of the data packet of FEC packet group 2. For example, the displayed image may be a first image 610 of FIG. 6A.

For example, as illustrated in the transmission/reception process of the fourth FEC packet group of FIG. 15A, the reception device 120 may display an image based on the decoded data for FEC packet group 4. Since decoding was successful, the displayed image has no image glitch and may have a second image quality corresponding to the data packet transmission rate of FEC packet group 4. For example, since the data packet transmission rate of FEC packet group 4 is higher than the data packet transmission rate of FEC packet group 2, the displayed image may be the second image 620 of FIG. 6B which has a higher image quality than the first image 610 of FIG. 6A.

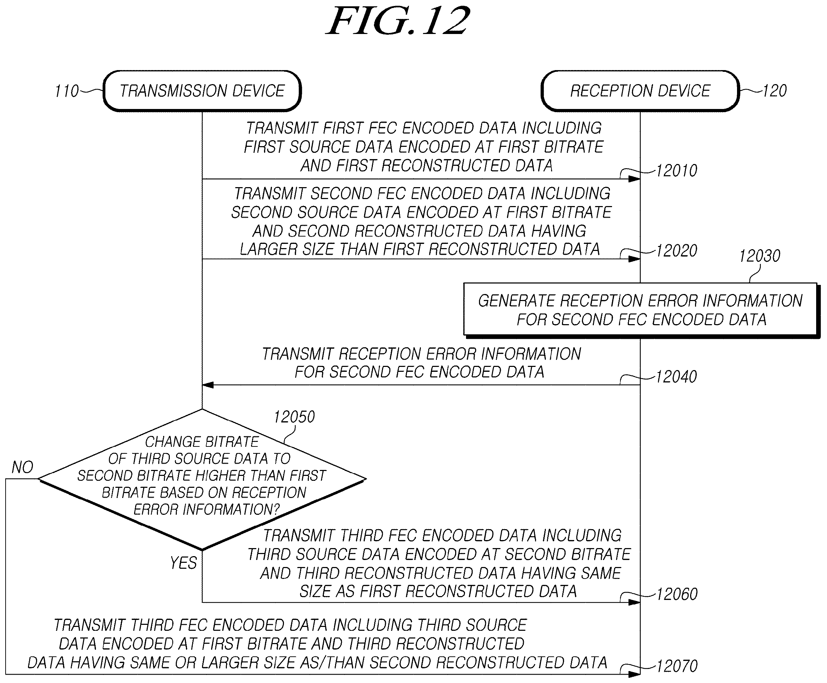

FIG. 12 is a flowchart schematically illustrating a transmission rate adjustment procedure according to an embodiment of the disclosure.

The transmission rate adjustment procedure of the embodiment of FIG. 12 may be, e.g., a procedure for adjusting (e.g., increasing) the source data bitrate up to the target bandwidth according to, e.g., the first transmission rate adjustment mode. According to an embodiment, the transmission rate adjustment procedure according to the embodiment of FIG. 12 may be an example of the transmission rate adjustment procedure of FIG. 9. Thus, the description of the transmission rate adjustment procedure according to the embodiment of FIG. 9 may be referred to for the description of the transmission rate adjustment procedure according to the embodiment of FIG. 12, unless contradictory.

Referring to FIG. 12, in operation 12010, the transmission device 110 may transmit, to the reception device 120, first FEC encoded data including first source data encoded at a first bitrate and first repair data for error correction for the first source data. According to an embodiment, the first FEC encoded data may be FEC encoded data for the first frame. For a description of transmission of the FEC encoded data, a reference may be made to the description of FIGS. 4A and 4B. Therefore, no duplicate description is given.

In operation 12020, the transmission device 110 may transmit, to the reception device 120, second FEC encoded data including second source data encoded at the first bitrate and second repair data for error correction for the second source data. According to an embodiment, a size (or FEC rate) of the second repair data may be larger than a size (or FEC rate) of the first repair data. In other words, the transmission device 110 may transmit source data for the current second FEC encoded data at the same bitrate as the bitrate of the first source data of the first FEC encoded data which is the previous FEC encoded data and transmit the repair data for the current second FEC encoded data at the same FEC rate as the FEC rate of the first repair data of the previous first encoded data. In other words, the transmission device 110 may maintain the source data transmission rate and increase only the repair data transmission rate. According to an embodiment, the second FEC encoded data may be FEC encoded data for the second frame following the first frame.

According to an embodiment, the transmission device 110 may set the size of the second repair data to a value at which a portion having a reception error in the second source data is reconstructed using at least a portion of the second repair data.

In operation 12030, the reception device 120 may generate reception error information for the second FEC encoded data. According to an embodiment, the reception device 120 may identify the number of packets in which a reception error occurs in the second FEC packet group for transferring the second FEC encoded data and generate reception error information for the second FEC encoded data based on the identified number of packets in which a reception error occurs. The number of packets in which the reception error occurs may be, e.g., the sum of the number of data packets dropped and the number of dropped FEC packets in the second FEC packet group. Operation 12030 of FIG. 12 may be an example of operation 9030 of FIG. 9.

According to an embodiment, the reception device 120 may identify the number of packets (e.g., the number of dropped packets) in which the reception error occurs, based on FEC-related information (e.g., total packet number information for the second FEC packet group, data packet number information, and/or FEC packet number information) for the second FEC packet group transmitted from the transmission device. For transmission of the FEC-related information and the operation in which the reception device 120 identifies the number of packets in which a reception error occurs based on the FEC-related information, a reference may be made to the above description (e.g., FIGS. 4A to 6B). Therefore, no duplicate description is given.

According to an embodiment, the reception device 120 may generate reception error information for the second FEC encoded data based on the identified number of packets in which a reception error occurs. According to an embodiment, the reception error information for the second FEC encoded data may include information indicating the number of packets in which a reception error occurs in the second FEC packet group for transferring the second FEC encoded data or information indicating whether the number of packets in which a reception error occurs is a preset error reference value or less (or information indicating whether a reception error is detected).

In operation 12040, the reception device 120 may transmit reception error information for the second FEC encoded data to the transmission device 110.

In operation 12050, the transmission device 110 may determine whether to change the bitrate of the third source data included in the third FEC encoded data transmitted after the second FEC encoded data into a second bitrate higher than the first bitrate based on the reception error information for the second FEC encoded data. According to an embodiment, the transmission device 110 may perform an operation (e.g., operation 9050 of FIG. 9) for identifying whether the target bandwidth is reached before operation 12050 and perform operation 12050 only when the target bandwidth is reached.

According to an embodiment, the transmission device 110 may identify whether the number of errors of the received packet is an error reference value based on the reception error information for the second FEC encoded data. The number of errors in the received packet may correspond to, e.g., the number of packets in which the reception error occurs.

According to an embodiment, when it is identified that the number of packets in which a reception error occurs for the second FEC encoded data is larger than the error reference value (e.g., when it is identified that the number of packets in which a reception error occurs exceeds the error reference value), the transmission device 110 may determine to change the bitrate of the third source data included in the third FEC encoded data transmitted after the second FEC encoded data into the second transmission rate higher than the first transmission rate of the second source data included in the second FEC encoded data. According to an embodiment, the transmission device 110 may set the bitrate of the third source data to a value at which the portion of the third source data in which an error occurs is reconstructable by the third repair data having the size (e.g., the size or FEC rate of the first repair data) of the default repair data. When it is determined to change the bitrate of the third source data into the second transmission rate higher than the first transmission rate, operation 12060 may be performed.

According to an embodiment, when it is identified that the number of packets in which a reception error occurs for the second FEC encoded data is equal to or smaller than the error reference value (e.g., when it is identified that the number of packets in which a reception error occurs is the error reference value or less), the transmission device 110 may determine not to change the bitrate of the third source data included in the third FEC encoded data transmitted after the second FEC encoded data into the second bitrate higher than the first bitrate of the second source data included in the second FEC encoded data. When it is determined not to change the bitrate of the third source data into the second bitrate higher than the first bitrate, operation 12070 may be performed.

In operation 12060, the transmission device 110 may transmit the third source data encoded at the second bitrate to the reception device 120 and transmit the third FEC encoded data including the third repair data having the same size (or same FEC rate) as the first repair data. In other words, the transmission device 110 may transmit the third source data for the third FEC encoded data at the second bitrate higher than the first bitrate which is the bitrate of the second source data of the second FEC encoded data which is the previous FEC encoded data and transmit the third repair data for the third FEC encoded data with the same size (or FEC rate) as the size (or FEC rate) of the default repair data. According to an embodiment, the third FEC encoded data may be FEC encoded data for the third frame following the second frame.

In operation 12070, the transmission device 110 may transmit the third source data encoded at the first bitrate to the reception device 120 and transmit the third FEC encoded data including the third repair data having the same or larger as/than the second repair data. In other words, the transmission device 110 may transmit the third source data for the third FEC encoded data at the same first bitrate as the bitrate of the source data of the second FEC encoded data which is the previous FEC encoded data and transmit the third repair data for the third FEC encoded data at the FEC rate identical to or higher than the FEC rate of the repair data of the previous second FEC encoded data.

As described above, in the transmission rate adjustment procedure of FIG. 12 using the first transmission rate adjustment mode, unlike the transmission rate adjustment procedure using the second transmission rate adjustment mode, if the target bandwidth is not reached, instead of immediately increasing the source data bitrate, the transmission device 110 first increases the size (or FEC rate) of the repair data and transmits the same and determines whether to increase the source data bitrate for the corresponding FEC encoded data using the reception error information for the previous FEC encoded data received from the reception device 120. Thus, it is possible to increase the source data bitrate up to the target bandwidth without image glitch or deterioration of image quality.

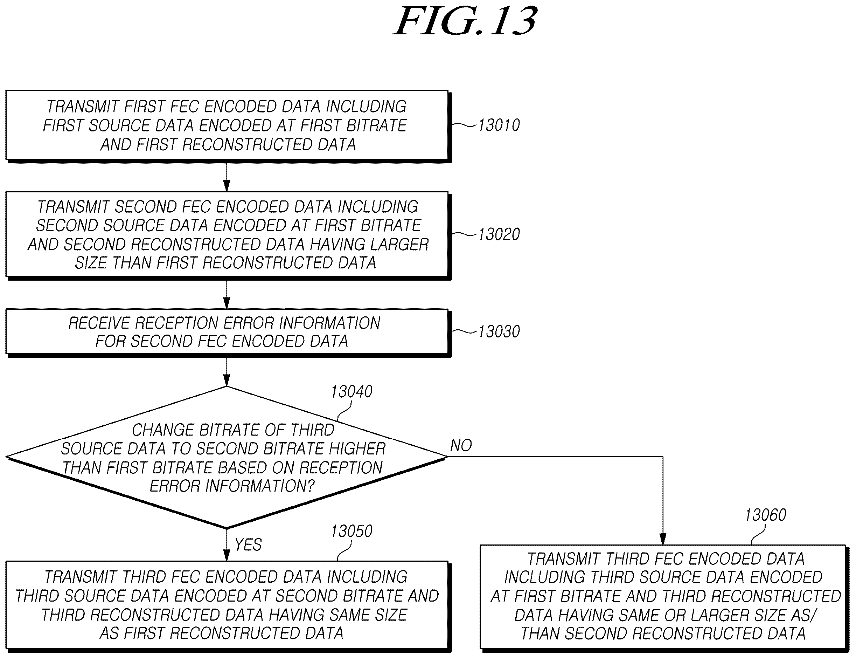

FIG. 13 illustrates operations of a transmission device in a transmission rate adjustment procedure according to an embodiment of the disclosure.

The transmission rate adjustment procedure of the embodiment of FIG. 13 may be, e.g., a procedure for adjusting (e.g., increasing) the source data bitrate up to the target bandwidth according to, e.g., the first transmission rate adjustment mode. According to an embodiment, the transmission rate adjustment procedure according to the embodiment of FIG. 13 may be an example of the transmission rate adjustment procedure of FIG. 12.

Referring to FIG. 13, in operation 13010, a transmission device (e.g., the transmission device 110 of FIGS. 1 and 2) may transmit, to a reception device (e.g., the reception device 120 of FIGS. 1 and 3), first FEC encoded data including first source data encoded at a first bitrate and first repair data for error correction for the first source data. For the description of operation 13010, a reference may be made to the description of operation 12010. Therefore, no duplicate description is given.

For example, as illustrated in the transmission/reception process of the first FEC packet group of FIG. 15A, the transmission device 110 may transmit FEC packet group 1 having a total of 11 packets including nine (9) data packets and two (2) associated FEC packets for a predetermined time (e.g., 1/60 seconds of 60fps). For example, as illustrated in the transmission/reception process of the third FEC packet group of FIG. 15A, the transmission device 110 may transmit FEC packet group 3 having a total of 12 packets including 10 data packets and two (2) associated FEC packets for a predetermined time.

In operation 13020, the transmission device 110 may transmit, to the reception device 120, first FEC encoded data including second source data encoded at the first bitrate and second repair data for error correction for the second source data. According to an embodiment, a size (or FEC rate) of the second repair data may be larger than a size (or FEC rate) of the first repair data. In other words, the transmission device 110 may transmit the first source data at the same bitrate as the bitrate of the first source data of the first FEC encoded data which is the previous FEC encoded data and transmit the second repair data at an FEC rate higher than the FEC rate of the first repair data of the previous first FEC encoded data. In other words, the transmission device 110 may increase only the FEC packet transmission rate while maintaining the data packet transmission rate. For the description of operation 13020, a reference may be made to the description of operation 12020. Therefore, no duplicate description is given.

For example, as illustrated in the transmission/reception process of the second FEC packet group of FIG. 15A, the transmission device 110 may transmit FEC packet group 2 having a total of 12 packets including nine (9) data packets and three (3) associated FEC packets for a predetermined time. For example, as illustrated in the transmission/reception process of the fourth FEC packet group of FIG. 15A, the transmission device 110 may transmit FEC packet group 4 having a total of 13 packets including 10 data packets and three (3) associated FEC packets for a predetermined time.

In operation 13030, the transmission device 110 may receive, from the reception device 120, reception error information for the second FEC encoded data. For the description of operation 13030, a reference may be made to the description of operation 12040. Therefore, no duplicate description is given.

For example, as illustrated in the transmission/reception process of the second FEC packet group of FIG. 15A, the transmission device 110 may receive the reception error information for FEC packet group 2. The reception error information for FEC packet group 2 may include information indicating the number (e.g., two (2)) of packets in which a reception error occurs in FEC packet group 2 or information indicating that the number (e.g., two (2)) of packets in which a reception error occurs is a preset error reference value (e.g., two (2)) or less (or information indicating that no reception error is detected).

For example, as illustrated in the transmission/reception process of the fourth FEC packet group of FIG. 15A, the transmission device 110 may receive the reception error information for FEC packet group 4. The reception error information for FEC packet group 4 may include information indicating the number (e.g., three (3)) of packets in which a reception error occurs in FEC packet group 4 or information indicating that the number (e.g., three (3)) of packets in which a reception error occurs exceeds the preset error reference value (e.g., two (2)) or less (or information indicating that a reception error is detected).

In operation 13040, the transmission device 110 may determine whether to change the bitrate of the third source data included in the third FEC encoded data transmitted after the second FEC encoded data into a second bitrate higher than the first bitrate based on the reception error information for the second FEC encoded data. For the description of operation 13040, a reference may be made to the description of operation 12050. Therefore, no duplicate description is given.

For example, since it is identified that the number (e.g., two (2)) of packets in which a reception error occurs in the previous second FEC encoded data is the error reference value (e.g., two (2)) or less, the transmission device 110 may determine to increase the bitrate of the source data included in the third FEC encoded data to the second bitrate higher than the first bitrate of the source data included in the previous second FEC encoded data. For example, since the number (e.g.., three (3)) of packets in which a reception error occurs in the previous fourth FEC encoded data exceeds the error reference value (e.g., two (2)), the transmission device 110 may determine not to increase the bitrate of the source data included in the third FEC encoded data to the second bitrate higher than the first bitrate of the source data included in the second FEC encoded data.

In operation 13050, when it is determined to change the bitrate of the third source data to the second bitrate higher than the first bitrate, the transmission device 110 may transmit, to the reception device 120, third FEC encoded data including the third source data encoded at the second bitrate and third repair data for error correction for the third source data. According to an embodiment, the size (or FEC rate) of the third repair data may be identical to the size (or FEC rate) of the default repair data (e.g., the size (or FEC rate) of the first repair data). For example, as illustrated in the transmission/reception process of the third FEC packet group of FIG. 15A, the transmission device 110 may transmit FEC packet group 3 having a total of 12 packets including 10 data packets and two (2) associated FEC packets for a predetermined time. For the description of operation 13050, a reference may be made to the description of operation 12060. Therefore, no duplicate description is given.

In operation 13060, when it is determined not to change the bitrate of the third source data to the second bitrate higher than the first bitrate, the transmission device 110 may transmit, to the reception device 120, third FEC encoded data including the third source data encoded at the first bitrate and third repair data for error correction for the third source data. According to an embodiment, a size (or FEC rate) of the third repair data may be equal to or larger than a size (or FEC rate) of the second repair data. For example, as illustrated in the transmission/reception process of the fifth FEC packet group of FIG. 15A, the transmission device 110 may transmit FEC packet group 5 having a total of 14 packets including 10 data packets and four (4) associated FEC packets for a predetermined time. For the description of operation 13060, a reference may be made to the description of operation 12070. Therefore, no duplicate description is given.

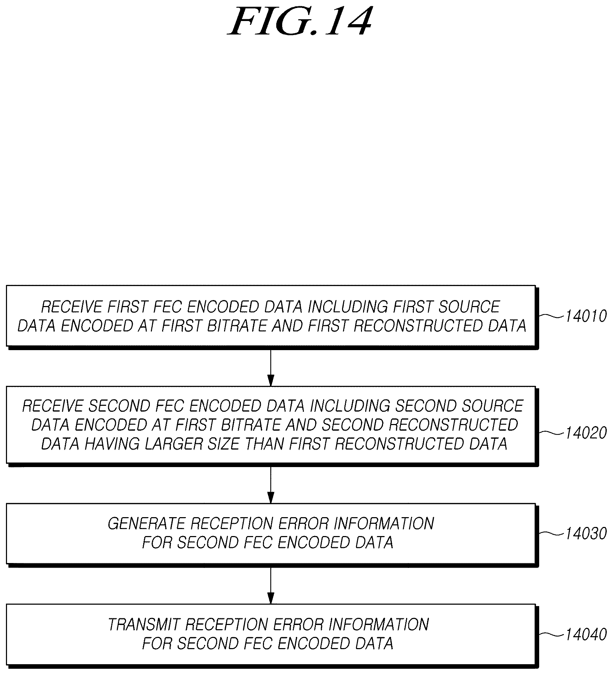

FIG. 14 illustrates operations of a reception device in a transmission rate adjustment procedure according to an embodiment of the disclosure.

The transmission rate adjustment procedure of the embodiment of FIG. 14 may be, e.g., a procedure for adjusting (e.g., increasing) the source data bitrate up to the target bandwidth according to, e.g., the first transmission rate adjustment mode. According to an embodiment, the transmission rate adjustment procedure according to the embodiment of FIG. 14 may be an example of the transmission rate adjustment procedure of FIG. 12.

Referring to FIG. 14, in operation 14010, a reception device (e.g., the reception device 120 of FIGS. 1 and 3) may receive, from a transmission device (e.g., the transmission device 110 of FIGS. 1 and 2), first FEC encoded data including first source data encoded at a first bitrate and first repair data for error correction for the first source data. For example, as illustrated in the transmission/reception process of the first FEC packet group of FIG. 15A, the reception device 120 may receive FEC packet group 1 having a total of 11 packets including nine (9) data packets and two (2) associated FEC packets for a predetermined time. For example, as illustrated in the transmission/reception process of the third FEC packet group of FIG. 15A, the reception device 120 may receive FEC packet group 3 having a total of 12 packets including 10 data packets and two (2) associated FEC packets for a predetermined time. For the description of operation 14010, a reference may be made to the description of operation 12010. Therefore, no duplicate description is given.

In operation 14020, the reception device 120 may receive, from the transmission device 110, first FEC encoded data including second source data encoded at the first bitrate and second repair data for error correction for the second source data. According to an embodiment, a size (or FEC rate) of the second repair data may be larger than a size (or FEC rate) of the first repair data. For example, as illustrated in the transmission/reception process of the second FEC packet group of FIG. 15A, the reception device 120 may receive FEC packet group 2 having a total of 11 packets including nine (9) data packets and two (2) associated FEC packets for a predetermined time. For example, as illustrated in the transmission/reception process of the fourth FEC packet group of FIG. 15A, the reception device 120 may receive FEC packet group 4 having a total of 13 packets including 10 data packets and three (3) associated FEC packets for a predetermined time. For the description of operation 14020, a reference may be made to the description of operation 12020. Therefore, no duplicate description is given.

In operation 14030, the reception device 120 may generate reception error information for the second FEC encoded data. According to an embodiment, the reception device 120 may identify the number of packets in which a reception error occurs in the second FEC packet group for transferring the second FEC encoded data and generate reception error information for the second FEC encoded data based on the identified number of packets in which a reception error occurs. For the description of operation 14030, a reference may be made to the description of operation 12030. Therefore, no duplicate description is given.

For example, as illustrated in the transmission/reception process of the second FEC packet group of FIG. 15A, due to the limitation of the network bandwidth, two (2) packets are dropped during transmission, but since the number of dropped packets is within the number reconstructable by the FEC packets, decoding of data packets may be successfully performed. The reception device 120 may identify that the number of packets in which a reception error occurs is two (2) and the decoding result is successful. The reception device 120 may identify the number of packets in which a reception error occurs in FEC packet group 2 and generate reception error information for FEC packet group 2 based on the identified number of packets in which a reception error occurs. The reception error information for FEC packet group 2 may include information indicating the number (e.g., two (2)) of packets in which a reception error occurs in FEC packet group 2 or information indicating that the number (e.g., two (2)) of packets in which a reception error occurs is a preset error reference value (e.g., two (2)) or less (or information indicating that no reception error is detected).

For example, as illustrated in the transmission/reception process of the fourth FEC packet group of FIG. 15A, due to the limitation of the network bandwidth, three packets are dropped during transmission, but since the number of dropped packets is within the number reconstructable by the FEC packets, decoding of data packets may be successfully performed. The reception device 120 may identify that the number of packets in which a reception error occurs is three (3) and the decoding result is successful. The reception device 120 may identify the number of packets in which a reception error occurs in FEC packet group 4 and generate reception error information for FEC packet group 4 based on the identified number of packets in which a reception error occurs. The reception error information for FEC packet group 4 may include information indicating the number (e.g., three (3)) of packets in which a reception error occurs in FEC packet group 4 or information indicating that the number (e.g., three (3)) of packets in which a reception error occurs exceeds the preset error reference value (e.g., two (2)) or less (or information indicating that a reception error is detected).

In operation 14040, the reception device 120 may transmit reception error information for the second FEC encoded data to the transmission device 110. For the description of operation 14040, a reference may be made to the description of operation 12040. Therefore, no duplicate description is given.

For example, as illustrated in the transmission/reception process of the second FEC packet group of FIG. 15A, the reception device 120 may transmit the reception error information for FEC packet group 2.

For example, as illustrated in the transmission/reception process of the fourth FEC packet group of FIG. 15A, the reception device 120 may transmit the reception error information for FEC packet group 4.

According to an embodiment, before operation 14040 or after operation 14040, the reception device 120 may display an image based on the decoded data.

For example, as illustrated in the transmission/reception process of the second FEC packet group of FIG. 15A, the reception device 120 may display an image based on the decoded data for FEC packet group 2. Since decoding succeeds, the displayed image has no image glitch or image quality deterioration and may have a first image quality corresponding to the transmission rate of the data packet of FEC packet group 2. For example, the displayed image may be a first image 610 of FIG. 6A.

For example, as illustrated in the transmission/reception process of the fourth FEC packet group of FIG. 15A, the reception device 120 may display an image based on the decoded data for FEC packet group 4. Since decoding succeeds, the displayed image has no image glitch and may have a second image quality corresponding to the data packet transmission rate of FEC packet group 4. For example, since the data packet transmission rate of FEC packet group 4 is higher than the data packet transmission rate of FEC packet group 2, the displayed image may be the second image 620 of FIG. 6B which has a higher image quality than the first image 610 of FIG. 6A. As such, as compared with when the second third request message is used, when the first transmission rate adjustment mode is used, no image glitch or image quality deterioration occurs although a reception error (or abnormality) is detected.

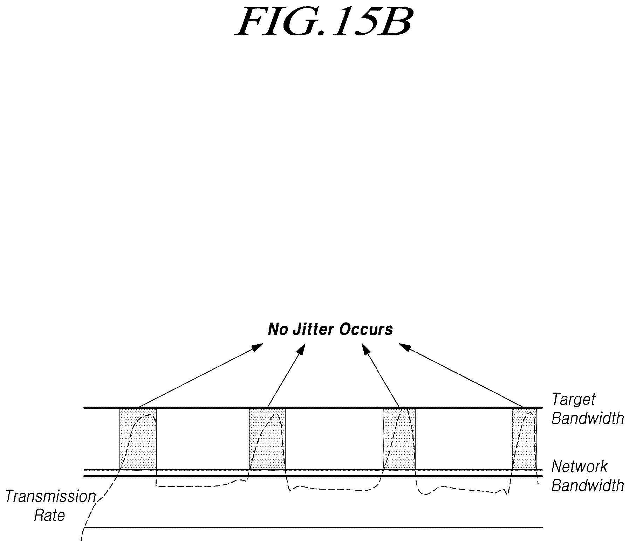

FIG. 15A illustrates an example packet transmission/reception context according to a transmission rate adjustment procedure according to an embodiment of the disclosure. FIG. 15B illustrates an example change in data packet transmission rate according to a transmission rate adjustment procedure according to an embodiment of the disclosure.

The transmission rate adjustment procedure according to the embodiment of FIGS. 15A and 15B may be a procedure (e.g., the transmission rate adjustment procedure of FIG. 9 or 12) for adjusting the data packet transmission rate up to the target bandwidth according to, e.g., the first transmission rate adjustment mode.

In the embodiments of FIGS. 15A and 15B, the transmission rate is the number of packets transmitted for a predetermined time, and the network bandwidth and the target bandwidth are a bandwidth (e.g., 10Mbps) capable of processing, e.g., 10 packets and a bandwidth (e.g., 20Mbps) capable of processing, e.g., 20 packets, for a predetermined time, respectively.

According to an embodiment, each FEC packet group of FIG. 15 may correspond to each frame. For example, the FEC packet group 1 may correspond to the first frame, and the FEC packet group 2 transmitted after the FEC packet group 1 may correspond to the second frame following the first frame.

The packet transmission/reception process of the first FEC packet group (e.g., the FEC packet group corresponding to the first frame) of FIG. 15A is described. The transmission device (e.g., the transmission device 110 of FIGS. 1 and 2) may transmit FEC packet group 1 having a total of 11 packets including nine (9) data packets and two (2) associated FEC packets for a predetermined time (e.g., for 1/60 seconds of 60 fps), and the reception device (e.g., the reception device 120 of FIGS. 1 and 3) may receive the FEC packet group 1. In this case, due to the limitation of the network bandwidth, one (1) packet may be dropped during transmission. However, since the number of dropped packet is within the number reconstructable by the FEC packets, decoding of the data packets may be successfully performed. Accordingly, the reception device 120 may identify that the number of packets in which a reception error occurs is one (1) and the decoding result is successful. The reception device 120 may transmit reception error information for FEC packet group 1 to the transmission device. The reception error information for FEC packet group 1 may include information indicating the number of packets in which a reception error occurs in FEC packet group 1 is 1 or information indicating that the number of packets in which a reception error occurs is a preset error reference value or less (or information indicating that no reception error is detected). Further, the reception device 120 may display an image based on the data decoded before or after the reception error information is transmitted. For example, the reception device 120 may display an image based on the decoded data for FEC packet group 1. Since decoding succeeds, the displayed image has no image glitch or image quality deterioration, and may have a first image quality corresponding to the transmission rate of the data packet of FEC packet group 1. For example, the displayed image may be a first image 610 of FIG. 6A.

The packet transmission/reception process of the second FEC packet group (e.g., the FEC packet group corresponding to the second frame following the first frame) of FIG. 15A is described. Since the target bandwidth is not yet reached, the transmission device 110 first increases the FEC packet transmission rate to determine whether to increase the data packet transmission rate. For example, as illustrated in FIG. 15A, the transmission device 110 increases the number of FEC packets transmitted for a predetermined time (e.g., for 1/60 seconds of 60fps) by 1, as compared with previous FEC packet group 1 to increase the FEC packet transmission rate. In this case, the transmission device may maintain the data packet transmission rate. Thus, the FEC reconstruction rate may be increased as much as the total packet transmission rate increases. For example, the transmission device 110 may transmit FEC packet group 2 having a total of 12 packets including nine (9) data packets and three (3) associated FEC packets for a predetermined time, and the reception device 120 may receive FEC packet group 2. In this case, due to the limitation of the network bandwidth, two (2) packets may be dropped during transmission. However, since the number of dropped packets is within the number reconstructable by the FEC packets, decoding of the data packets may be successfully performed. Accordingly, the reception device 120 may identify that the number of packets in which a reception error occurs is two (2) and the decoding result is successful. The reception device 120 may transmit reception error information for FEC packet group 2 to the transmission device. The reception error information for FEC packet group 2 may include information indicating the number of packets in which a reception error occurs in FEC packet group 2 is two (2) or information indicating that the number of packets in which a reception error occurs is a preset error reference value or less (or information indicating that no reception error is detected). Further, the reception device 120 may display an image based on the data decoded before or after the reception error information is transmitted. For example, the reception device 120 may display an image based on the decoded data for FEC packet group 2. Since decoding was successful, the displayed image has no image glitch or image quality deterioration, and may have a first image quality corresponding to the transmission rate of the data packet of FEC packet group 2. For example, since the data packet transmission rate of FEC packet group 2 is identical to the data packet transmission rate of FEC packet group 1, the displayed image may be the first image 610 of FIG. 6A.

The packet transmission/reception process of the third FEC packet group (e.g., the FEC packet group corresponding to the third frame following the second frame) of FIG. 15A is described. Since the target bandwidth is not yet reached, and it is identified that the number of packets in which a reception error occurs in FEC packet group 2 which is the previous FEC packet group is the error reference value or less, the transmission device 110 increases the data packet transmission rate. For example, as illustrated in FIG. 15A, the transmission device 110 increases the number of data packets transmitted for a predetermined time (e.g., for 1/60 seconds of 60fps) by one (1), as compared with FEC packet group 2 to increase the data packet transmission rate. In this case, the FEC packet transmission rate may be set to the default transmission rate (e.g., the transmission rate at which the number of data packets transmitted for the predetermined time corresponds to two (2)). Thus, it is possible to increase the data packet transmission rate as much as the extra bandwidth identified based on the reception error information for previous FEC packet group 2. For example, the transmission device 110 may transmit FEC packet group 3 having a total of 12 packets including 10 data packets and two (2) associated FEC packets for a predetermined time, and the reception device 120 may receive FEC packet group 3. In this case, due to the limitation of the network bandwidth, two (2) packets may be dropped during transmission. However, since the number of dropped packets is within the number reconstructable by the FEC packets, decoding of the data packets may be successfully performed. Accordingly, the reception device 120 may identify that the number of packets in which a reception error occurs is two (2), and the decoding result is successful. The reception device 120 may transmit reception error information for FEC packet group 3 to the transmission device 110. The reception error information for FEC packet group 3 may include information indicating the number of packets in which a reception error occurs in FEC packet group 3 is two (2) or information indicating that the number of packets in which a reception error occurs is a preset error reference value or less (or information indicating that no reception error is detected). Further, the reception device 120 may display an image based on the data decoded before or after the reception error information is transmitted. For example, the reception device 120 may display an image based on the decoded data for FEC packet group 3. Since decoding was successful, the displayed image has no image glitch or image quality deterioration, and may have a second image quality corresponding to the transmission rate of the data packet of FEC packet group 3. Since the data packet transmission rate of FEC packet group 3 is higher than the data packet transmission rate of FEC packet group 2 (or FEC packet group 1), the displayed image may be the second image 620 which has a higher image quality than the first image 610 of FIG. 6A.

The packet transmission/reception process of the fourth FEC packet group (e.g., the FEC packet group corresponding to the fourth frame following the third frame) of FIG. 15A is described. Since the target bandwidth is not yet reached, the transmission device 110 first increases the FEC packet transmission rate to determine whether to increase the data packet transmission rate. For example, as illustrated in FIG. 15A, the transmission device 110 increases the number of FEC packets transmitted for a predetermined time (e.g., for 1/60 seconds of 60fps) by one (1), as compared with previous FEC packet group 3 to increase the FEC packet transmission rate. In this case, the transmission device 110 may maintain the data packet transmission rate. Thus, the FEC reconstruction rate may be increased as much as the total packet transmission rate increases. For example, the transmission device may transmit FEC packet group 4 having a total of 13 packets including 10 data packets and three (3) associated FEC packets for a predetermined time, and the reception device 120 may receive FEC packet group 4. In this case, due to the limitation of the network bandwidth, three (3) packets may be dropped during transmission. However, since the number of dropped packets is within the number reconstructable by the FEC packets, decoding of the data packets may be successfully performed. Accordingly, the reception device 120 may identify that the number of packets in which a reception error occurs is three (3) and the decoding result is successful. However, since the number of packets in which a reception error occurs exceeds the present error reference value, the reception device 120 may identify that a reception error (or abnormality) is detected. The reception device 120 may transmit reception error information for FEC packet group 4 to the transmission device 110. The reception error information for FEC packet group 4 may include information indicating the number of packets in which a reception error occurs in FEC packet group 4 is three (3) or information indicating that the number of packets in which a reception error occurs exceeds the preset error reference value (or information indicating that a reception error is detected). Further, the reception device 120 may display an image based on the data decoded before or after the reception error information is transmitted. For example, the reception device 120 may display an image based on the decoded data for FEC packet group 4. Since decoding was successful, the displayed image has no image glitch or image quality deterioration and may have a second image quality corresponding to the transmission rate of the data packet of FEC packet group 4. For example, the displayed image may be a second image 620 of FIG. 6A.

The packet transmission/reception process of the fifth FEC packet group (e.g., the FEC packet group corresponding to the fifth frame following the fourth frame) of FIG. 15A is described. Since the target bandwidth is not yet reached, but it is identified that the number of packets in which a reception error occurs in FEC packet group 4, which is the previous FEC packet group, exceeds the error reference value, the transmission device 110 may maintain the data packet transmission rate and increase or maintain, the FEC packet transmission rate. For example, as illustrated in FIG. 15A, the transmission device 110 may adjust the data packet transmission rate to a transmission rate higher than the transmission rate of previous FEC packet group 4. For example, as illustrated in FIG. 15A, the transmission device increases the number of FEC packets transmitted for a predetermined time (e.g., for 1/60 seconds of 60fps) by one (1), as compared with previous FEC packet group 4 to increase the FEC packet transmission rate. In this case, the transmission rate of the data packet may be maintained. Thus, the FEC reconstruction rate may be increased as much as the total packet transmission rate increases. For example, the transmission device 110 may transmit FEC packet group 5 having a total of 14 packets including 10 data packets and four (4) associated FEC packets for a predetermined time, and the reception device 120 may receive FEC packet group 5. In this case, due to the limitation of the network bandwidth, four (4) packets may be dropped during transmission. However, since the number of dropped packets is within the number reconstructable by the FEC packets, decoding of the data packets may be successfully performed. Accordingly, the reception device 120 may identify that the number of packets in which a reception error occurs is four (4), and the decoding result is successful. The reception device 120 may transmit reception error information for FEC packet group 5 to the transmission device. The reception error information for FEC packet group 5 may include information indicating the number of packets in which a reception error occurs in FEC packet group 5 is four (4) or information indicating that the number of packets in which a reception error occurs exceeds the preset error reference value or less (or information indicating that a reception error is detected). Further, the reception device 120 may display an image based on the data decoded before or after the reception error information is transmitted. For example, the reception device 120 may display an image based on the decoded data for FEC packet group 5. Since decoding was successful, the displayed image has no image glitch or image quality deterioration, and may have a second image quality corresponding to the transmission rate of the data packet of FEC packet group 5. For example, the displayed image may be a second image 620 of FIG. 6A.

The packet transmission/reception process of the sixth FEC packet group (e.g., the FEC packet group corresponding to the sixth frame following the fifth frame) of FIG. 15A is described. Since the target bandwidth is not yet reached, but decoding failure persists (e.g., when it occurs a preset number (e.g., three (3)) or times or more), the transmission device 110 may decrease the data packet transmission rate. For example, as illustrated in FIG. 15A, the transmission device 110 may adjust the data packet transmission rate to the default data transmission rate (e.g., the transmission rate of previous FEC packet group 1). For example, the transmission device 110 may transmit FEC packet group 6 having a total of 11 packets including nine (9) data packets and two (2) associated FEC packets for a predetermined time, and the reception device 120 may receive FEC packet group 6. In this case, due to the limitation of the network bandwidth, one (1) packet may be dropped during transmission. However, since the number of dropped packets is within the number reconstructable by the FEC packets, decoding of the data packets may not be successfully performed. Accordingly, the reception device 120 may identify that the number of packets in which a reception error occurs is one (1) and the decoding result is successful. The reception device 120 may transmit reception error information for FEC packet group 6 to the transmission device 110. The reception error information for FEC packet group 4 may include information indicating the number of packets in which a reception error occurs in FEC packet group 6 is one (1) or information indicating that the number of packets in which a reception error occurs is less than a preset error reference value (or information indicating that no reception error is detected). Further, the reception device 120 may display an image based on the data decoded before or after the reception error information is transmitted. For example, the reception device 120 may display an image based on the decoded data for FEC packet group 6. Since decoding was successful, the displayed image has no image glitch or image quality deterioration, and may have a first image quality corresponding to the transmission rate of the data packet of FEC packet group 6. For example, the displayed image may be a first image 610 of FIG. 6A.

As in the above-described example, when the transmission rate is adjusted according to the first transmission rate adjustment mode and if it is identified that the target bandwidth is not reached, the transmission device first increases the FEC packet transmission rate (or size or FEC rate of repair data) and maintains the data packet transmission rate (or source data bitrate). Thus, the FEC reconstruction rate may be increased as much as the total packet transmission rate increases. In this case, even when more packets are dropped during transmission due to the limitation of the network bandwidth, the reception device may reconstruct the dropped data packets using FEC packets, thus preventing a decoding failure. Further, image glitch that may arise due to decoding failure is also prevented. For example, as illustrated in the boxes shown in solid box of FIG. 15B, no jitter occurs for data packets even in the section where the overall packet transmission rate is higher than the network bandwidth. Accordingly, the data packet transmission rate (or source data bitrate) does not drop, so that no image quality deterioration occurs in the image displayed on the reception device. Thus, it is possible to adjust the data packet transmission rate up to the target bandwidth without image glitch or deterioration of image quality.

FIG. 16 illustrates a procedure for setting a transmission rate adjustment mode according to an embodiment of the disclosure.

According to an embodiment, the procedure for setting the transmission rate adjustment mode may be a procedure used when a plurality of transmission rate modes are selectively set. For example, according to an embodiment, the procedure for setting the transmission rate adjustment mode may be a procedure used when a plurality of transmission rate modes are selectively set based on a user input.

According to an embodiment, the transmission device (e.g., the transmission device 110 of FIGS. 1 and 2) may adjust (e.g., increase) the data packet transmission rate up to the target bandwidth based on the transmission rate adjustment mode. According to an embodiment, the transmission rate adjustment mode may be set to, e.g., either the first transmission rate adjustment mode or the second transmission rate adjustment mode.

According to an embodiment, the first transmission rate adjustment mode may be a transmission rate adjustment mode including the operation in which the transmission device determines whether to increase the transmission rate (or the bitrate of source data) of the data packet for the next FEC packet group (or next FEC encoded data) using information related to the reception error for the FEC packet group (or FEC encoded data) of the reception device (hereinafter, referred to as reception error information). For example, the first transmission rate adjustment mode may be a transmission rate adjustment mode including an operation in which the transmission device determines whether to increase the transmission rate of data packet (or bitrate of source data) for the next FEC packet group (or next FEC encoded data) based on the reception error information of the reception device according to first increasing the transmission rate of FEC packet (or FEC rate of repair data or FEC size of repair data) for the FEC packet group (or FEC encoding data) and transmitting it. The transmission rate adjustment procedure based on the first transmission rate adjustment mode may be, e.g., the transmission rate adjustment procedure described with reference to FIGS. 9 to 15.

According to an embodiment, the second transmission rate adjustment mode may be a transmission rate adjustment mode including an operation in which the transmission device first increases the transmission rate of the data packet (or bitrate of source data) for the next FEC packet group (or next FEC encoded data) without using the reception error information for the FEC packet group (or FEC encoded data) of the reception device. For example, the second transmission rate adjustment mode may be a transmission rate adjustment mode including an operation in which the transmission device first increases the transmission rate of data packet (or bitrate of source data) for the next FEC packet group (or next FEC encoded data) without using the reception error information of the reception device according to first increasing the transmission rate of FEC packet (or FEC rate of repair data or FEC size of repair data) for the FEC packet group (or FEC encoding data) and transmitting it. The transmission rate adjustment procedure based on the second transmission rate adjustment mode may be, e.g., the transmission rate adjustment procedure described with reference to FIGS. 8A and 8B.

Referring to FIG. 16, in operation 16010, the reception device 120 may obtain information for setting the resolution associated with the target bandwidth. According to an embodiment, the reception device 120 may obtain information for setting the resolution associated with the target bandwidth based on a user input. The resolution may be, e.g., one of high definition (HD), full HD (FHD), ultra HD (UHD), 8K or 4K.

In operation 16020, the reception device 120 may transmit the information for setting the resolution to the transmission device 110.

In operation 16030, the transmission device 110 may set the resolution and the target bandwidth based on the information for setting the resolution. According to an embodiment, the transmission device 110 may set the resolution to one of HD, FHD, UHD, 8K, or 4K based on the information for setting the resolution and set the target bandwidth corresponding to the set resolution. For example, as the resolution increases, the target bandwidth may be set to a higher value.

According to an embodiment, operations 16010 to 16030 may be omitted. For example, the transmission device 110 itself may set the resolution and the target bandwidth corresponding to the resolution regardless of the user input of the reception device 120.

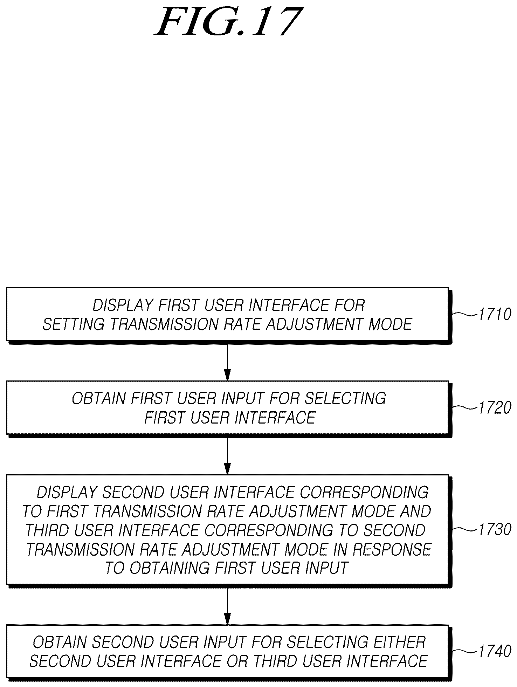

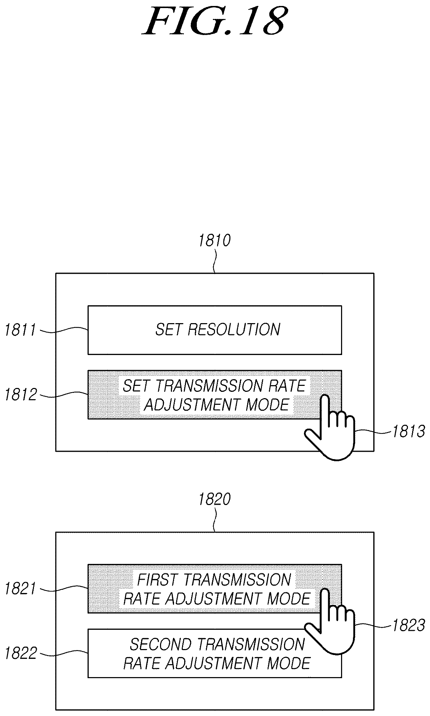

In operation 16040, the reception device 120 may obtain information for setting the transmission rate adjustment mode. According to an embodiment, the reception device 120 may obtain information for setting the transmission rate adjustment mode based on a user input. An example of operation 16040 is described below with reference to FIGS. 17 and 18.

In operation 16050, the reception device 120 may transmit the information for setting the transmission rate adjustment mode to the transmission device 110.

In operation 16060, the transmission device 110 may set the transmission rate adjustment mode based on the information for setting the transmission rate adjustment mode. According to an embodiment, the transmission device 110 may set the transmission rate adjustment mode to either the first transmission rate adjustment mode or the second transmission rate adjustment mode based on the information for setting the transmission rate adjustment mode.

According to an embodiment, operations 16040 and 16050 may be omitted. For example, the transmission device 110 itself may set the transmission rate adjustment mode regardless of a user input or may use only the default transmission rate adjustment mode.

In operation 16070, the transmission device 110 may transmit an FEC packet group (or FEC encoded data) including data packets and FEC packets processed based on the set transmission rate adjustment mode. For example, when the transmission rate adjustment mode is set to the first transmission rate adjustment mode, the transmission device 110 may transmit data packets and FEC packets (or source data and repair data) according to, e.g., the transmission rate adjustment procedure described above with reference to FIGS. 9 to 15. For example, when the transmission rate adjustment mode is set to the second transmission rate adjustment mode, the transmission device 110 may transmit data packets and FEC packets (or source data and repair data) according to, e.g., the transmission rate adjustment procedure described above with reference to FIGS. 8A and 8B.

FIG. 17 illustrates operations of a reception device in a procedure for setting a transmission rate adjustment mode according to an embodiment of the disclosure. FIG. 18 illustrates an example of a user interface provided by a reception device to set a transmission rate adjustment mode according to an embodiment of the disclosure.

The operation of the reception device according to the embodiment of FIG. 17 may be an example of operation 16040 of the procedure of FIG. 16.

Referring to FIG. 17, in operation 1710, the reception device (e.g., the reception device 120 of FIGS. 1 and 3) may display a first user interface (or a first object (e.g., selectable item)) for setting a transmission rate adjustment mode. According to an embodiment, as illustrated in FIG. 18, the reception device 120 may display a first screen 1810 including the first user interface 1812 (e.g., an icon) for setting the transmission rate adjustment mode. The first screen 1810 may further include a user interface 1811 (e.g., an icon) for setting the resolution.

In operation 1720, the reception device (e.g., the reception device 120 of FIGS. 1 and 3) may obtain a first user input for selecting the first user interface (or a first object). According to an embodiment, as illustrated in FIG. 18, the reception device 120 may receive a first user input 1813 for selecting the first user interface 1812 (e.g., an icon) for selecting the transmission rate adjustment mode in the first screen 1810.

In operation 1730, the reception device 120 may display a second user interface (or a second object (e.g., selectable item)) corresponding to a first transmission rate adjustment mode and a third user interface (or a third object (e.g., selectable item)) corresponding to a second transmission rate adjustment mode in response to obtaining the first user input. According to an embodiment, as illustrated in FIG. 18, the reception device 120 may display a second screen 1820 including a second user interface 1821 (e.g., an icon) corresponding to the first transmission rate adjustment mode and a third user interface 1822 (e.g., an icon) corresponding to the second transmission rate adjustment mode.

In operation 1740, the reception device (e.g., the reception device 120 of FIGS. 1 and 3) may obtain a second user input for selecting the second user interface (or the second object) or the third user interface (or the third object). According to an embodiment, as illustrated in FIG. 18, the reception device 120 may receive a second user input 1823 (e.g., a touch input or an input through another device (e.g., a remote controller)) for selecting the second user interface 1821 corresponding to the first transmission rate adjustment mode in the second screen 1820.

Thus, the reception device 120 may identify that the first transmission rate adjustment mode is selected by the user and transmit information for the selected first transmission rate adjustment mode to the transmission device 110. The transmission device 110 may set the transmission rate adjustment mode to the first transmission rate adjustment mode based on the received information. Thereafter, the transmission device 110 may perform a data packet and FEC packet transmission procedure (e.g., the transmission rate adjustment procedure of FIG. 9 or 12) based on the set first transmission rate adjustment mode.

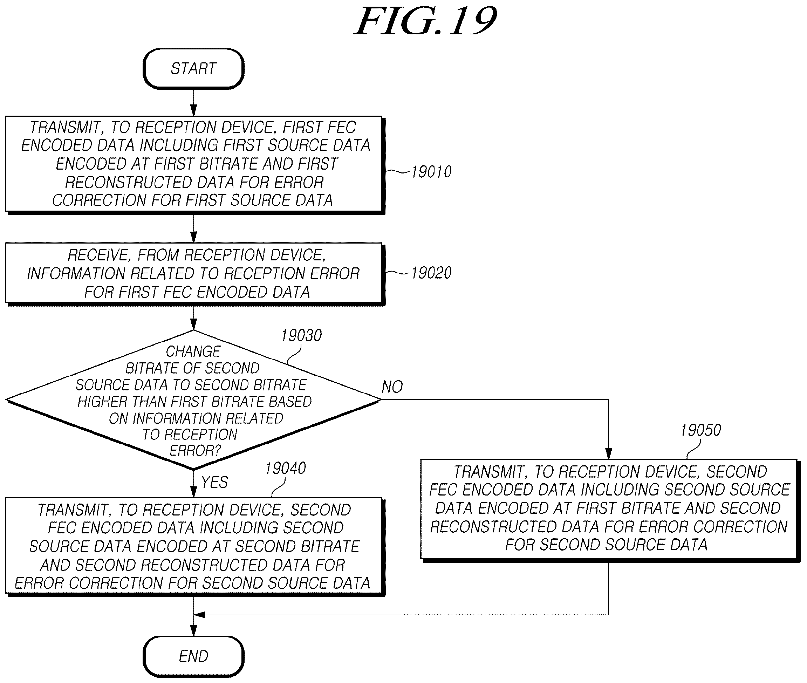

FIG. 19 illustrates a method by a transmission device according to an embodiment of the disclosure.

In FIG. 19, no duplicate description is given of those described above in connection with FIGS. 1 to 18.

Referring to FIG. 19, a transmission device (e.g., the transmission device 110 of FIGS. 1 and 2) may transmit, to a reception device (e.g., the reception device 120 of FIGS. 1 and 3), first FEC encoded data including first source data encoded at a first bitrate and first repair data for error correction for the first source data (19010).

The transmission device may receive, from the reception device, information related to a reception error for the first FEC encoded data (19020).

The transmission device may determine whether to change a bitrate of second source data into a second bitrate higher than the first bitrate based on the information related to the reception error (19030). According to an embodiment, the second source data may be included in second FEC encoded data transmitted after the first FEC encoded data is transmitted.

According to an embodiment, the transmission device may transmit, to the reception device, third FEC encoded data including third source data encoded at the same bitrate as the first bitrate and third repair data for error correction for the third source data, before the first FEC encoded data is transmitted. According to an embodiment, a size of the first repair data may be larger than a size of the third repair data. According to an embodiment, the size of the first repair data may be set to a value at which a portion having a reception error in the first source data may be successfully reconstructed using at least a portion of the first repair data.

According to an embodiment, the transmission device may identify whether a number of packets having a reception error in a first packet group for transferring the first FEC encoded data is a preset error reference value or less, based on the information related to the reception error for the first FEC encoded data and, when it is identified that the number of the packets having the reception error is the preset error reference value or less, determine to change the bitrate of the second source data into the second bitrate higher than the first bitrate. According to an embodiment, the first packet group may include at least one first data packet including the first source data and at least one first FEC packet including the first repair data.

According to an embodiment, when it is identified that the number of the packets having the reception error is more than the preset error reference value, the transmission device may determine to maintain the bitrate of the second source data as the first bitrate.

According to an embodiment, the information related to the reception error for the first FEC encoded data may include first information indicating the number of the packets having the reception error or second information indicating whether the number of the packets having the reception error is the preset error reference value or less.

According to an embodiment, when it is determined to change the bitrate of the second source data into the second bitrate higher than the first bitrate, the transmission device may transmit, to the reception device, the second FEC encoded data including the second source data encoded at the second bitrate and the second repair data (19040). According to an embodiment, a size of the second repair data may be smaller than a size of the first repair data.

According to an embodiment, when it is determined to maintain the bitrate of the second source data as the first bitrate, the transmission device may transmit, to the reception device, the second FEC encoded data including the second source data encoded at the first bitrate and the second repair data (19050). According to an embodiment, a size (or FEC rate) of the second repair data may be equal to or larger than a size (or FEC rate) of the first repair data.

According to an embodiment, the first FEC encoded data may be FEC encoded data for a first frame, the second FEC encoded data may be FEC encoded data for a second frame following the first frame, and the third FEC encoded data may be FEC encoded data for the second frame preceding the first frame.

According to an embodiment, an FEC code rate used to generate repair data by performing FEC encoding on source data may be set per frame, and a size of the generated repair data may be determined based on the FEC code rate.

According to an embodiment, a number of at least one first data packet including the first source data may be identical to a number of at least one third data packet including the third source data, a number of at least one first FEC packet including the first repair data may be a first value larger than a number of at least one third FEC packet including the third repair data, and a number of at least one second data packet including second source data encoded at the second bitrate may be the first value larger than the number of at least one first data packet including the first source data.

According to an embodiment, the first data packet or a header of the first data packet may include FEC-related information. The FEC-related information may include at least one of information indicating a number of all packets included in a first packet group to which the first data packet belongs, information indicating that the number of the at least one first data packet, or information indicating the number of the at least one first FEC packet.

According to an embodiment, the transmission device may use an adaptive bitrate scheme.

According to an embodiment, the transmission device may identify that the first bitrate is lower than a bitrate maximally settable within a target bandwidth.

According to an embodiment, the transmission device may, before transmitting the first FEC encoded data, receive, from the reception device, configuration information for setting a transmission rate adjustment mode to a first transmission rate adjustment mode among a plurality of transmission rate adjustment modes including the first transmission rate adjustment mode and a second transmission rate adjustment mode and set the transmission rate adjustment mode to the first transmission rate adjustment mode based on the configuration information. According to an embodiment, the first transmission rate adjustment mode may be a transmission rate adjustment mode including an operation in which the transmission device determines whether to increase a bitrate of source data in next FEC encoded data using the information related to the reception error for FEC encoded data received from the reception device, and the second transmission rate adjustment mode may be a transmission rate adjustment mode including an operation in which the transmission device first increases the bitrate of the source data in the next FEC encoded data without using the information related to the reception error for the FEC encoded data received from the reception device.

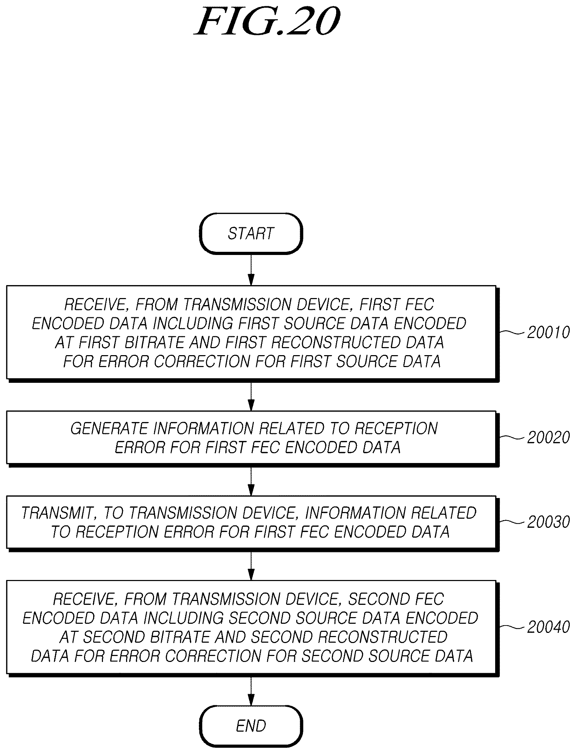

FIG. 20 illustrates a method by a reception device according to an embodiment of the disclosure.

In FIG. 20, no duplicate description is given of those described above in connection with FIGS. 1 to 19.

Referring to FIG. 20, a reception device (e.g., the reception device 120 of FIGS. 1 and 3) may receive, from a transmission device (e.g., the transmission device 110 of FIGS. 1 and 3), first FEC encoded data including first source data encoded at a first bitrate and first repair data for error correction for the first source data (20010).

The reception device may generate information related to a reception error for the first FEC encoded data (20020).

The reception device may transmit, to the transmission device, information related to a reception error for the first FEC encoded data (20030).

The reception device may receive, from the transmission device, second FEC encoded data including second source data encoded at a second bitrate and second repair data for error correction for the second source data. According to an embodiment, the second bitrate of the second source data may be determined based on the information related to the reception error.

According to an embodiment, the reception device may receive, from the transmission device, third FEC encoded data including third source data encoded at the same bitrate as the first bitrate and third repair data for error correction for the third source data, before the first FEC encoded data is received.

According to an embodiment, the information related to the reception error for the first FEC encoded data may include first information indicating a number of packets having a reception error in a first packet group for transferring the first FEC encoded data or second information indicating whether the number of the packets having the reception error is a preset error reference value or less.

According to an embodiment, the reception device may, before receiving the first FEC encoded data, display a first user interface for setting a transmission rate adjustment mode, obtain a first user input selecting the first user interface, display a second user interface corresponding to a first transmission rate adjustment mode and a third user interface corresponding to a second transmission rate adjustment mode in response to obtaining the first user input, obtain a second user input selecting the second user interface out of the second user interface or the third user interface, and transmit, to the transmission device, information for setting the transmission rate adjustment mode to the first transmission rate adjustment mode in response to obtaining the second user input. According to an embodiment, the first transmission rate adjustment mode may be a transmission rate adjustment mode including an operation in which the transmission device determines whether to increase a bitrate of source data in next FEC encoded data using the information related to the reception error for FEC encoded data received from the reception device, and the second transmission rate adjustment mode may be a transmission rate adjustment mode including an operation in which the transmission device first increases the bitrate of the source data in the next FEC encoded data without using the information related to the reception error for the FEC encoded data received from the reception device.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments and should rather be defined by the following claims and equivalents thereof.

## Claims

1. A transmission device in an image processing system, comprising:
a communication circuit;
memory storing a program comprising at least one instruction; and
at least one processor connected to the communication circuit and the memory and executing the at least one instruction of the program stored in the memory,
wherein the at least one processor is configured to:
transmit, to a reception device, first forward-error-correction (FEC) encoded data comprising first source data encoded at a first bitrate and first repair data used for error correction for the first source data;
receive, from the reception device, information related to a reception error for the first FEC encoded data; and
determine whether to change a bitrate of second source data into a second bitrate higher than the first bitrate based on the information related to the reception error, and
wherein the second source data is included in second FEC encoded data transmitted after the first FEC encoded data is transmitted.

2. The transmission device of claim 1, wherein the at least one processor is further configured to transmit, to the reception device, third FEC encoded data before the first FEC encoded data is transmitted,
wherein the third FEC encoded data comprises third source data encoded at the same bitrate as the first bitrate and third repair data used for error correction for the third source data, and
wherein a size of the first repair data is larger than a size of the third repair data.

3. The transmission device of claim 2, wherein the size of the first repair data corresponds to a value so that a portion having a reception error in the first source data is reconstructed using at least a portion of the first repair data.

4. The transmission device of claim 1, wherein the at least one processor is configured to:
identify whether a number of packets having a reception error in a first packet group for transferring the first FEC encoded data is a preset error reference value or less, based on the information related to the reception error for the first FEC encoded data; and
based on identifying that the number of the packets having the reception error is the preset error reference value or less, determine to change the bitrate of the second source data to the second bitrate higher than the first bitrate, and
wherein the first packet group comprises at least one first data packet comprising the first source data and at least one first FEC packet comprising the first repair data.

5. The transmission device of claim 4, wherein the at least one processor is configured to:
based on identifying that the number of the packets having the reception error is more than the preset error reference value, determine to maintain the bitrate of the second source data as the first bitrate.

6. The transmission device of claim 4, wherein the information related to the reception error for the first FEC encoded data comprises:
first information indicating the number of the packets having the reception error or
second information indicating whether the number of the packets having the reception error is the preset error reference value or less.

7. The transmission device of claim 4, wherein the at least one processor is further configured to:
based on a determination to change the bitrate of the second source data into the second bitrate higher than the first bitrate, transmit, to the reception device, the second FEC encoded data comprising the second source data encoded at the second bitrate and the second repair data, and
wherein a size of the second repair data is smaller than a size of the first repair data.

8. The transmission device of claim 5, wherein the at least one processor is configured to:
based on a determination to maintain the bitrate of the second source data as the first bitrate, transmit, to the reception device, the second FEC encoded data comprising the second source data encoded at the first bitrate and the second repair data, and
wherein a size of the second repair data is equal to or larger than a size of the first repair data.

9. The transmission device of claim 2, wherein the first FEC encoded data is FEC encoded data for a first frame,
wherein the second FEC encoded data is FEC encoded data for a second frame following the first frame,
wherein the third FEC encoded data is FEC encoded data for the second frame preceding the first frame,
wherein an FEC code rate used to generate repair data by performing FEC encoding on source data is set per a frame, and
wherein a size of the generated repair data is determined based on the FEC code rate.

10. The transmission device of claim 2, wherein a number of at least one first data packet comprising the first source data is identical to a number of at least one third data packet comprising the third source data,
wherein a number of at least one first FEC packet comprising the first repair data is a first value larger than a number of at least one third FEC packet comprising the third repair data,
wherein a number of at least one second data packet comprising second source data encoded at the second bitrate is the first value larger than the number of at least one first data packet comprising the first source data,
wherein the first data packet or a header of the first data packet comprises FEC-related information, and
wherein the FEC-related information comprises at least one of:
information indicating a number of all packets in a first packet group to which the first data packet belongs,
information indicating the number of the at least one first data packet, or
information indicating the number of the at least one first FEC packet.

11. The transmission device of claim 1, wherein the transmission device is configured to use an adaptive bitrate scheme.

12. The transmission device of claim 1, wherein the at least one processor is configured to identify that the first bitrate is lower than a bitrate maximally settable within a target bandwidth, before the first FEC encoded data is transmitted.

13. The transmission device of claim 1, wherein the at least one processor is configured to:
before the first FEC encoded data is transmitted, receive, from the reception device, configuration information for setting a transmission rate adjustment mode to a first transmission rate adjustment mode among a plurality of transmission rate adjustment modes comprising the first transmission rate adjustment mode and a second transmission rate adjustment mode; and
set the transmission rate adjustment mode to the first transmission rate adjustment mode, based on the configuration information,
wherein the first transmission rate adjustment mode comprises an operation in which the transmission device determines whether to increase a bitrate of source data in next FEC encoded data using the information related to the reception error for FEC encoded data received from the reception device, and
wherein the second transmission rate adjustment mode comprises an operation in which the transmission device first increases the bitrate of the source data in the next FEC encoded data without using the information related to the reception error for the FEC encoded data received from the reception device.

14. A reception device in an image processing system, comprising:
a communication circuit;
memory storing a program comprising at least one instruction; and
at least one processor connected to the communication circuit and the memory and executing the at least one instruction of the program stored in the memory, wherein the at least one processor is configured to:
receive, from a transmission device, first forward error correction (FEC) encoded data comprising first source data encoded at a first bitrate and first repair data used for error correction for the first source data;
generate information related to a reception error for the first FEC encoded data;
transmit, to the transmission device, information related to a reception error for the first FEC encoded data; and
receive, from the transmission device, second FEC encoded data comprising second source data encoded at a second bitrate and second reconstructed data used for error correction for the second source data,
wherein the second bitrate of the second source data is determined based on the information related to the reception error.

15. A method by a transmission device in an image processing system, the method comprising:
transmitting, to a reception device, first forward error correction (FEC) encoded data comprising first source data encoded at a first bitrate and first repair data for error correction for the first source data;
receiving, from the reception device, information related to a reception error for the first FEC encoded data; and
determining whether to change a bitrate of second source data into a second bitrate higher than the first bitrate based on the information related to the reception error,
wherein the second source data is included in second FEC encoded data transmitted after the first FEC encoded data is transmitted.
